(19) Europäisches Patentamt
European Patent Office
Office européen des brevets

(11) EP 3 409 699 A1

(12) EUROPEAN PATENT APPLICATION
published in accordance with Art. 153(4) EPC

(43) Date of publication:
05.12.2018 Bulletin 2018/49

(21) Application number: 17744125.0

(22) Date of filing: 23.01.2017

(51) Int Cl.:
*C08F 210/08* (2006.01) *C08L 23/20* (2006.01)

(86) International application number:
PCT/JP2017/002105

(87) International publication number:
WO 2017/130895 (03.08.2017 Gazette 2017/31)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 28.01.2016 JP 2016014619
10.08.2016 JP 2016157357

(71) Applicant: Mitsui Chemicals, Inc.
Minato-ku
Tokyo 105-7122 (JP)

(72) Inventors:
- WATANABE, Mayumi
Sodegaura-shi
Chiba 299-0265 (JP)
- OKAMOTO, Masahiko
Sodegaura-shi
Chiba 299-0265 (JP)
- YAMASHITA, Masahiro
Sodegaura-shi
Chiba 299-0265 (JP)
- EBISAWA, Ikuko
Sodegaura-shi
Chiba 299-0265 (JP)
- MITA, Kazuki
Sodegaura-shi
Chiba 299-0265 (JP)

(74) Representative: J A Kemp
14 South Square
Gray's Inn
London WC1R 5JJ (GB)

# (54) BUTENE-BASED POLYMER, RESIN COMPOSITION, AND MOLDED OBJECT

(57) [Problem] A butene polymer having a short crystal transformation time and excellent creep resistance properties is provided.

[Solution] A butene polymer including: a 1-butene unit in an amount of 80.0 to 99.9 mol% and at least one olefin unit selected from ethylene and α-olefins having 3 to 20 carbon atoms other than 1-butene in a total amount (K) of 0.1 to 20.0 mol% (the sum of the amount of the 1-butene unit and the total amount (K) is 100 mol%), in which the butene polymer satisfies the requirements (i) to (iv):
(i) an mmmm is 94.0% to 99.9%, as measured by $^{13}$C-NMR,
(ii) an rr is 1.5% or less, as measured by $^{13}$C-NMR,
(iii) an intrinsic viscosity [η] at 135°C in a decalin solvent is 0.5 to 5.5 dl/g, and
(iv) a ratio of a component having a molecular weight of 10000 or less is less than 1.3 mass%, as measured by GPC.

EP 3 409 699 A1

## Description

TECHNICAL FIELD

The present invention relates to butene polymers having a specific composition and specific properties, resin compositions containing the butene polymer, and molded articles formed from the butene polymer or the resin composition.

BACKGROUND ART

Pipes, pipe joints, and tanks that are composed of a butene polymer have excellent creep resistance properties, environmental stress cracking resistance, flexibility, tenacity, heat resistance, high temperature and low temperature properties, and wear resistance, and hence they are used as various members such as those for water supply, hot water supply, underfloor heating, hot spring piping, chemical spray, and drainage.

It is known that there are mainly two crystal types of butene polymers, a butene polymer has a metastable type II crystal structure (tetragonal transformation) right after it is cooled from its molten state and shaped into a molded article, and it undergoes solid-phase crystal transformation for about one week to thereby be formed into a more stable type I crystal structure (hexagonal transformation) (Non Patent Literature 1).

Butene polymers have a drawback in that the crystal transformation changes their dimensions and stiffness after molding, that the crystal transformation time is long, and thus that these problems complicate customers' quality control and inventory control. In other words, in technical fields that involve the melt-molding of butene polymers, there is a demand for a polymer having a short crystal transformation time from the type II crystal to the type I crystal.

As a response to this demand, a method in which a radical-processed crystalline olefin polymer is blended with a butene polymer for the purpose of shortening the crystal transformation time (see Patent Literature 1), and a method in which an additive is added to a butene polymer for the same purpose (see Patent Literature 2 and Patent Literature 3) are known.

In addition, Patent Literature 4 discloses a 1-butene polymer having high stereoregularity but does not clarify its crystal transformation behavior.

Citation List

Patent Literature

Patent Literature 1: JP-A-1986-037833
Patent Literature 2: JP-A-1982-036140
Patent Literature 3: JP-A-1982-092038
Patent Literature 4: WO2014/050817

Non Patent Literature

Non Patent Literature 1: Journal of Polymer Science: Part A, volume1, pages 59-84 (1963)

SUMMARY OF INVENTION

Technical Problem

Butene polymers are not yet favorable in terms of the costs for molding them into pipes, pipe joints, tanks, and the like nor in the effect of shortening the crystal transformation time, and further improvement is demanded. A method based on incorporation of a comonomer may be carried out to shorten the crystal transformation time, but there is a concern that the incorporation of a comonomer will reduce mechanical properties, long-term properties, and the like. It is desirable that the mechanical properties, long-term properties, and the like are not reduced even if the crystal transformation time is short.

An object of the present invention is to provide a butene polymer having a short crystal transformation time from the type II crystal to the type I crystal and further having high elastic modulus and yielding point strength, i.e., excellent creep resistance properties.

Solution to Problem

The present inventors have vigorously studied to solve the above-mentioned problems. As a result, they have come to complete the present invention by discovering that a butene polymer having a specific composition and specific properties has a short crystal transformation time from the type II crystal to the type I crystal and further has high elastic modulus and yielding point strength.

The present invention relates to the following [1] to [13] .

[1] A butene polymer containing: a structural unit derived from 1-butene in an amount of 80.0 to 99.9 mol%; and a structural unit derived from at least one olefin selected from ethylene and α-olefins having 3 to 20 carbon atoms other than 1-butene in a total amount (K) of 0.1 to 20.0 mol% (provided that the sum of the amount of the structural unit derived from 1-butene and the total amount (K) is 100 mol%), in which the butene polymer satisfies the requirements (i) to (iv) :

(i) a pentad isotacticity (mmmm) is 94.0% to 99.9%, as measured by $^{13}$C-NMR;
(ii) a syndiotactic triad fraction (rr) is 1.5% or less, as measured by $^{13}$C-NMR;
(iii) an intrinsic viscosity [η] at 135°C in a decalin solvent is in the range of 0.5 to 5.5 dl/g; and
(iv) a ratio of a component having a molecular weight of 10000 or less is less than 1.3 mass%, as measured by gel permeation chromatography (GPC).

[2] The butene polymer according to [1], in which the amount of the structural unit derived from 1-butene is 90.0 to 99.9 mol%, and the total amount (K) is 0.1 to 10.0 mol%.
[3] The butene polymer according to [1], in which the amount of the structural unit derived from 1-butene is 90.0 to 96.2 mol%, and the total amount (K) is 3.8 to 10.0 mol%.
[4] The butene polymer according to any one of [1] to [3], in which the butene polymer further satisfies the following requirement (v): (v) a ratio of a weight average molecular weight to a number average molecular weight (Mw/Mn) is in the range of 1.5 to 20.0, as measured by gel permeation chromatography (GPC).
[5] The butene polymer according to any one of [1] to [4], in which the butene polymer further satisfies the following requirement (vi): (vi) a yield point stress (YS) is 16.0 MPa or more, as measured in a tensile test at a tension rate of 30 mm/min at a measurement temperature of 23°C in accordance with JIS K7113.
[6] The butene polymer according to any one of [1] to [5], in which the butene polymer further satisfies the following requirement (vii): (vii) a 95% crystal transformation completion time is 45 hours or less, as measured using a differential scanning calorimeter.
[7] The butene polymer according to any one of [1] to [6], in which the at least one olefin selected from ethylene and α-olefins having 3 to 20 carbon atoms other than 1-butene is propylene.
[8] The butene polymer according to any one of [1] to [6], in which the at least one olefin selected from ethylene and α-olefins having 3 to 20 carbon atoms other than 1-butene is ethylene.
[9] The butene polymer according to [1], comprising a polymer in which the amount of the structural unit derived from 1-butene is 90.0 to 97.0 mol%, and the total amount (K) is 3.0 to 10.0 mol%, and which has an intrinsic viscosity [η] at 135°C in a decalin solvent in the range of 2.0 to 5.5 dl/g.
[10] The butene polymer according to [9], further including a 1-butene homopolymer whose intrinsic viscosity [η] at 135°C in a decalin solvent is in the range of 0.5 to 1.5 dl/g.
[11] A resin composition including the butene polymer according to any one of [1] to [10].
[12] A molded article formed from the butene polymer according to any one of [1] to [10] or the resin composition according to [11].
[13] The molded article according to [12], in which the molded article is a pipe or a pipe joint.

Advantageous Effects of Invention

The present invention makes it possible to provide a butene polymer having a short crystal transformation time from the type II crystal to the type I crystal and having high elastic modulus and yielding point strength, i.e., excellent creep resistance properties. Owing to this, a molded article that undergoes a smaller change in dimensions and stiffness after molding and allows easy quality control and inventory control at customers can be provided, and further in a preferred aspect of the present invention, a molded article having excellent stiffness, heat resistance, and high temperature creep resistance properties can be provided.

BRIEF DESCRIPTION OF DRAWINGS

Fig. 1 is a graph of 95% crystal transformation completion times plotted with respect to the total amount of comonomers in Examples and Comparative Examples.
Fig. 2 is a graph of Young's moduli (YM) plotted with respect to the total amount of comonomers in Examples and Comparative Examples.
Fig. 3 is a graph of yield point stresses (YS) plotted with respect to the total amount of comonomers in Examples and Comparative Examples.

DESCRIPTION OF EMBODIMENTS

Below, butene polymers according to the present invention, resin compositions containing the polymer, and molded articles formed from the butene polymer or the resin composition will be described in detail, including preferred aspects thereof.

[Butene Polymer]

A butene polymer according to the present invention contains: a structural unit derived from 1-butene in an amount of 80.0 to 99.9 mol% and a structural unit derived from at least one olefin selected from ethylene and α-olefins having 3 to 20 carbon atoms other than 1-butene in a total amount (K) of 0.1 to 20.0 mol%. However, the sum of the amount of the structural unit derived from 1-butene and the total amount (K) is 100 mol%.
As used herein, "ethylene" and an "a-olefin having 3 to 20 carbon atoms other than 1-butene" are also each described as a "comonomer". The total amount (K) is the total amount of a structural unit(s) derived from a comonomer(s) (comonomer unit(s)). In a case where the butene polymer contains a structural unit derived from a comonomer, the structural unit may be a structural unit derived from one comonomer or a structural unit derived from two or more comonomers.
In the butene polymer according to the present invention, it is preferable that the amount of a structural unit derived from 1-butene is 85.0 to 99.9 mol% and the total amount (K) is 0.1 to 15.0 mol%, and it is more preferable that the amount of a structural unit derived from 1-butene is 90.0 to 99.9 mol%, and the total amount (K) is 0.1 to 10.0 mol%. It is still more preferable that the amount of a structural unit derived from 1-butene is 90.0 to 96.5 mol% and the total amount (K) is 3.5 to 10.0 mol%, it is still more preferable that the amount of a structural unit derived from 1-butene is 90.0 to 96.2 mol% and the total amount (K) is 3.8 to 10.0 mol%, and it is still more preferable that the amount of a structural unit derived from 1-butene is 90.0 to 96.0 mol%, and the total amount (K) is 4.0 to 10.0 mol%.
Having the amount of a structural unit derived from 1-butene and the total amount (K) in the above-mentioned ranges is preferable in that such a butene polymer is allowed to have a shorter crystal transformation time, maintaining crystallinity, crystal lamellar thickness, and mechanical strength such as elastic modulus or yielding point strength, at a high level.
The composition of a comonomer is measured by $^{13}C$-NMR.
The amount of each structural unit contained in the butene polymer can be adjusted, for example, on the basis of the amount of each olefin (for example, 1-butene, ethylene, an α-olefin having 3 to 20 carbon atoms other than 1-butene) that is added during polymerization reaction.
Examples of α-olefins having 3 to 20 carbon atoms other than 1-butene include propylene, 1-pentene, 3-methyl-1-butene, 1-hexene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, 3-ethyl-1-hexene, 1-octene, 1-decene, 1-dodecene, 1-tetradecene, 1-hexadecene, 1-octadecene, and 1-eicosene.
Among these, propylene, 3-methyl-1-butene, 1-hexene, 3-methyl-1-pentene, 1-octene, 1-decene, 1-dodecene, 1-tetradecene, 1-hexadecene, and 1-octadecene are preferable.
Among the comonomers, ethylene and α-olefins having 3 to 10 carbon atoms are more preferable, among which, ethylene and propylene are preferable, and propylene is particularly preferable. Propylene has a helical crystal structure similar to that of 1-butene, and hence makes it possible to attempt to shorten the crystal transformation time. Contrarily, 4-methyl-1-pentene, whose helical structure is different from that of propylene, may reduce the crystal transformation speed.
The comonomers may be used singly, or two or more may be used in combination.
The butene polymer according to the present invention may have a structural unit derived from a monomer other than ethylene and α-olefins having 3 to 20 carbon atoms as long as the butene polymer satisfies the below-mentioned requirements. The upper limit of the amount of a structural unit derived from the other monomer is, for example,

5 wt% or less with respect to the sum of the amount of a structural unit derived from 1-butene and the total amount (K) as 100 wt%.

The butene polymer according to the present invention satisfies the below-mentioned requirements (i) to (iv), and preferably further satisfies one or more of the below-mentioned requirements (v) to (viii). The butene polymer according to the present invention may be a blend polymer, for example a mixture of a plurality of butene polymers (for example, a mixture of a plurality of butene copolymers or a mixture of a butene copolymer and a butene homopolymer), in which case the blend polymer should satisfy the requirements for structural unit, and the blend polymer should satisfy the below-mentioned requirements (i) to (iv) and preferably should further satisfy one or more of the below-mentioned requirements (v) to (viii).

Below, each requirement will be described.

«Requirement (i)»

The requirement (i) is that the butene polymer has a pentad isotacticity (mmmm) of 94.0% to 99.9%, as measured by $^{13}$C-NMR. The mmmm is preferably 94.0 to 99.5%, more preferably 95.0 to 99.5%, still more preferably 95.0 to 99.0%, particularly preferably 95.0% to 98.5%, most preferably 95.0% to 98.0%. Having the mmmm at the lower limit or above affords a shorter crystal transformation time and excellent creep resistance properties and having the mmmm at the upper limit or below affords suitable creep resistance properties.

The mmmm can be adjusted within the range by suitably selecting the below-mentioned olefin polymerization catalyst and setting polymerization conditions such as polymerization temperature.

«Requirement (ii)»

The requirement (ii) is that the butene polymer has a syndiotactic triad fraction (rr) of 1.5% or less, as measured by $^{13}$C-NMR. The rr is preferably 1.3% or less, more preferably 1.1% or less, still more preferably 1.0% or less, particularly preferably 0.8% or less, more particularly preferably 0.5% or less, most preferably 0.4% or less. Having the rr at the upper limit or below affords fewer stereoregular defects, a shorter crystal transformation time, and excellent creep resistance properties. The lower the rr is, the more preferable it is, but the lower limit may be, for example, 0.1%.

The rr can be adjusted within the range by suitably selecting the below-mentioned olefin polymerization catalyst and suitably setting polymerization conditions such as polymerization temperature.

«Requirement (iii)»

The requirement (iii) is that the butene polymer has an intrinsic viscosity [η] (in a decalin solvent, at 135°C) in the range of 0.5 to 5.5 dl/g. The [η] is preferably 0.7 to 5.0 dl/g, more preferably 0.7 to 4.5 dl/g, still more preferably 0.7 to 4.0 dl/g, particularly preferably 0.7 to 2.8 dl/g. Having the [η] at the lower limit or above affords excellent strength to a molded article obtained from the butene polymer. Having the [η] at the upper limit or below affords excellent moldability to the butene polymer and is advantageous in terms of shortening the crystal transformation time and obtaining flexibility.

The intrinsic viscosity [η] can be adjusted within the range on the basis of the hydrogen concentration, the pressure, and the like of the polymerization system, and may be adjusted by mixing butene polymers having different [η] values.

«Requirement (iv)»

The requirement (iv) is that the butene polymer has a ratio of a component having a molecular weight of 10000 or less at less than 1.3 mass%, as measured by gel permeation chromatography (GPC, in terms of standard polystyrene). This ratio is preferably 0.9 mass% or less. Having the ratio of a component having a molecular weight of 10000 or less in the range can afford a molded article having a smaller amount of a low molecular weight component that may impair the creep strength of the molded article, and thus having excellent creep resistance properties. The ratio of a component having a molecular weight of 10000 or less can be adjusted within the range by suitably selecting the below-mentioned olefin polymerization catalyst.

In addition, the butene polymer has a weight average molecular weight (Mw) of preferably 50,000 to 2,000,000, more preferably 100,000 to 1,700,000, still more preferably 200,000 to 1,500,000, as measured by GPC (in terms of standard polystyrene). Having the Mw within the range allows the butene polymer to have moldability and a shorter crystal transformation time at an excellent level, and allows a molded article obtained therefrom to have excellent strength.

«Requirement (v)»

The requirement (v) is that the butene polymer has a ratio of its weight average molecular weight to its number average molecular weight (Mw/Mn) in the range of 1.5 to 20.0, as measured by gel permeation chromatography (GPC, in terms of standard polystyrene). The Mw/Mn is preferably 1.5 to 10.0, more preferably 2.0 to 10.0, still more preferably 3.0 to 10.0, particularly preferably 3.5 to 10.0. Having the Mw/Mn within the range can afford a molded article obtained from the butene polymer and having suitable flexibility. The Mw/Mn can be adjusted by suitably selecting the below-mentioned olefin polymerization catalyst, and, if necessary, using a method such as a multistep polymerization method, a mixed catalyst polymerization method, or one in which butene polymers having different molecular weights are mixed.

«Mechanical Properties»

«Requirement (vi)»

The requirement (vi) is that the butene polymer has a yield point stress (YS) of 16.0 MPa or more, as measured in a tensile test at a tension rate of 30 mm/min at a measurement temperature of 23°C in accordance with JIS K7113. The YS is in the range of preferably 16.0 to 25.0 MPa, more preferably 16.0 to 23.0 MPa.

In addition, the Young's modulus (YM) is preferably 300 MPa or more, as measured in the tensile test. The YM is in the range of more preferably 300 to 800 MPa, still more preferably 300 to 700 MPa.

«Thermal Properties»

The thermal properties of the butene polymer according to the present invention, for example, the melting point (TmI, TmII) and the melting calorie, ΔH, are determined by differential scanning calorimetry (heating speed: 10°C/min).

The butene polymer according to the present invention has a melting calorie, ΔH, of preferably 40.0 to 95.0 J/g, more preferably 50.0 to 90.0 J/g. The butene polymer according to the present invention has a melting point, TmI, of preferably 110.0 to 150.0°C, more preferably 115.0 to 150.0°C, still more preferably 120.0 to 140.0°C.

The melting calorie, ΔH, and the melting points, TmII and TmI, of the butene polymer are measured under the following conditions.

Using a differential scanning calorimeter (DSC), the butene polymer is heated from 30°C to 200°C at a heating speed of 10°C/min, held at 200°C for 5 minutes, then cooled to 30°C at a cooling speed of 10°C/min, held at 30°C for 5 minutes, then heated again from 30°C to 200°C at a heating speed of 10°C/min, held at 200°C for 5 minutes, and then cooled again to 30°C at a cooling speed of 10°C/min. Here, the melting peak exhibited in the second heating is known as the melting point, TmII, derived from the type II crystal.

A sample that has undergone the heat history is left to stand at room temperature for 10 days and heated again using a DSC from 30°C to 200°C at a heating speed of 10°C/min, the melting peak that is then exhibited is regarded as the melting point, TmI, derived from the type I crystal, and the melting calorie based on this melting peak of the type I crystal is regarded as the melting calorie, ΔH, of the butene polymer. TmI is likely to be higher than TmII. In a case where the crystal transformation is not completed, the peak derived from the type II crystal is exhibited at lower temperature, and the peak derived from the type I crystal is exhibited at higher temperature.

In the present invention, the melting calorie, ΔH, and the melting points, TmI and TmII, of the butene polymer can be adjusted in the range by suitable using the below-mentioned olefin polymerization catalyst and adjusting the amount of a structural unit derived from 1-butene. Here, it is known that the higher the mmmm (%) is and the lower the rr (%) is, the larger the Tm and the ΔH are.

«Requirement (vii)»

The requirement (vii) is that a 95% crystal transformation completion time is 45 hours or less, as measured with a differential scanning calorimeter. The 95% crystal transformation completion time is preferably 24 hours or less.

The 95% crystal transformation completion time is an index of the time required for crystal transformation from the type II to the type I in the crystalline form of the butene polymer, and specifically, the time is measured under the conditions described in Examples.

The butene polymer according to the present invention has high stereoregularity and contains a structural unit derived from a comonomer, and hence has a shorter crystal transformation time. Not only a differential scanning calorimeter but also an X-ray diffraction method makes it possible to observe that the crystal transformation time is short.

«Requirement (viii)»

The requirement (viii) is that a ratio of an eluted material is 2 mass% or less at 0°C or less in temperature rising elution fractionation (TREF). It is preferably 1 mass% or less, more preferably 0.5 mass% or less, still more preferably 0.2 mass% or less. The range is preferable in that the amount of a low temperature eluent component is smaller and that the mechanical properties and creep properties of a pipe are not impaired. The measurement method will be described in detail in the EXAMPLES section.

In addition, the butene polymer according to the present invention may be graft-modified with a polar monomer as long as the above-mentioned requirements are satisfied. The details of graft-modification will be described below in the «graft-modification» section.

[Characteristics of Butene Polymer]

The butene polymer according to the present invention has a surprising effect in that, although the butene polymer has a shorter crystal transformation time than a 1-butene homopolymer and furthermore has a comonomer unit, the butene polymer maintains mechanical properties such as elastic modulus and yielding point strength at the same level as a 1-butene homopolymer. In addition, this effect has been confirmed under an environment of not only normal temperature but also relatively high temperature.

It is known that a copolymer having a comonomer unit is such that the comonomer is usually less easily incorporated into the crystal, and hence that the copolymer has a smaller crystal lamellar thickness, a lower melting point, and reduced mechanical properties such as elastic modulus. As understood from the below-mentioned X-ray analysis results, however, the butene polymer according to the present invention is considered to maintain the mechanical properties because the butene polymer does not allow the crystal lamellar thickness to be easily reduced, despite having a comonomer unit.

Here, it is conceivable that the higher the mmmm (%) is, the higher the crystallinity is, the larger the crystal lamellar thickness is, and the more enhanced the mechanical properties are. Further, it is conceivable that the lower the rr (%) is, the higher the crystallinity is, the larger the crystal lamellar thickness is, and the more enhanced the mechanical properties are.

[Butene Polymer as Blend Polymer]

As above-mentioned, the Mw/Mn can be adjusted using a method such as a multistep polymerization method, a mixed catalyst polymerization method, or one in which butene polymers having different molecular weights are mixed. Specifically, the butene polymer according to the present invention is obtainable by blending a butene polymer having a low molecular weight and a butene polymer having a high molecular weight using the above-mentioned method and the like. In this regard, using a 1-butene homopolymer as a butene polymer having a low molecular weight is one of the preferred aspects.

For example, the butene polymer having a high molecular weight preferably has an intrinsic viscosity [η] in the range of 2.0 to 5.5 dl/g, as measured at 135°C in a decalin solvent. In one of the preferred aspects, the butene polymer having a high molecular weight contains a structural unit derived from 1-butene in an amount of 90.0 mol% or more and has the total amount (K) at 10.0 mol% or less, and it is more preferable that the amount of a structural unit derived from 1-butene is 90.0 to 97.0 mol%, and the total amount (K) is 3.0 to 10.0 mol%. In addition, the butene polymer having a high molecular weight, if used alone, more preferably satisfies the requirements for the butene polymer according to the present invention, for example, the requirements (i), (ii), and (iv).

For example, the butene polymer having a low molecular weight preferably has an intrinsic viscosity [η] in the range of 0.5 to 1.5 dl/g, as measured at 135°C in a decalin solvent. In one of the preferred aspects, the butene polymer having a low molecular weight contains a structural unit derived from 1-butene in an amount of 90.0 mol% or more and has the total amount (K) at 10.0 mol% or less, and more preferably, the butene polymer having a low molecular weight is a 1-butene homopolymer.

Using only a butene polymer having a high molecular weight as a copolymer and using a butene polymer having a low molecular weight as a homopolymer allows the resulting blend polymer (in other words, the butene polymer according to the present invention) to have an effectively shortened crystal transformation time and allows the resulting blend polymer (in other words, the butene polymer according to the present invention) to contain the total amount (K) at an inhibited level and to have mechanical properties that are inhibited from lowering.

A mixing ratio (mass ratio) of a butene polymer having a high molecular weight (hereinafter referred to as (al)) to a butene polymer having a low molecular weight (hereinafter referred to as (a2)) is not limited to a particular one as long as the resulting blend polymer satisfies the requirements for the present invention, and the (a1): (a2) is usually 50 to 90:10 to 50, preferably 60 to 85:15 to 40.

[Butene Polymer Production Method]

A method of producing the butene polymer according to the present invention includes a step of polymerizing 1-butene and at least one olefin selected from ethylene and α-olefins having 3 to 20 carbon atoms (excluding 1-butene) in the presence of the below-mentioned olefin polymerization catalyst. For producing a blend polymer, methods thereof include a method in which butene polymers having different molecular weights are mixed, in which method two or more butene polymers obtained using the above-mentioned method are mixed; a butene polymer obtained using the above-mentioned method and a butene polymer obtained using another method are mixed; a butene polymer obtained using the above-mentioned method and a butene homopolymer obtained using the catalyst or another method are mixed; or the like.

[1-1] Olefin Polymerization Catalysts

As an olefin polymerization catalyst, a catalyst including (A) a cross-linked metallocene compound and (B) at least one compound selected from

(b-1) an organoaluminum oxy-compound,
(b-2) a compound that forms an ion pair by reacting with the metallocene compound (A), and
(b-3) an organoaluminum compound is preferable.

<Cross-linked Metallocene Compound (A)>

The cross-linked metallocene compound (A) is preferably a compound represented by General Formula [A1], more preferably a compound represented by General Formula [A2].

[Chem. 1]

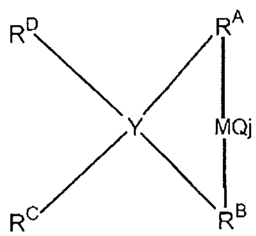

· · · [A1]

In Formula [A1], M is a Group 4 transition metal, for example, a titanium atom, a zirconium atom, or a hafnium atom; Q is a combination of the same or different kinds, and is selected from a halogen atom, a hydrocarbon group, a neutral conjugated or nonconjugated diene having 10 or less carbon atoms, an anionic ligand, and a neutral ligand capable of being coordinated with a lone pair; j is an integer from 1 to 4; $R^A$ and $R^B$, the same or different, are mononuclear or polynuclear hydrocarbon residues capable of forming a sandwich structure together with M; Y is a carbon atom or a silicon atom; $R^C$ and $R^D$, the same or different, are selected from a hydrogen atom, a hydrocarbon group, a silicon-containing group, a halogen atom, and a halogen-containing hydrocarbon group, and may combine to form a ring.

[Chem. 2]

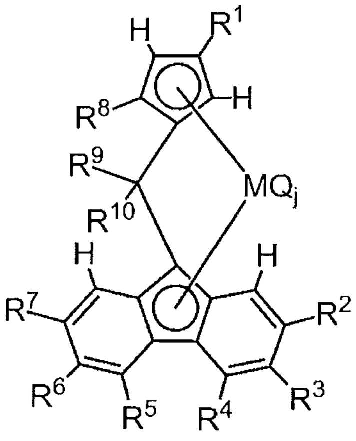

· · · [A 2]

In Formula [A2], $R^1$ is a hydrocarbon group, a silicon-containing group, or a halogen-containing hydrocarbon group; $R^2$ to $R^{10}$, the same or different, are selected from a hydrogen atom, a hydrocarbon group, a silicon-containing group, a halogen atom, and a halogen-containing hydrocarbon group; and the substituents may combine with each other to form a ring; M is a Group 4 transition metal; Q is a combination of the same or different kinds, and is selected from a halogen atom, a hydrocarbon group, a neutral conjugated or nonconjugated diene having 10 or less carbon atoms, an anionic ligand, or a neutral ligand capable of being coordinated with a lone pair; and j is an integer from 1 to 4.

Among the cross-linked metallocene compounds represented by General Formula [A2], the cross-linked metallocene compounds represented by General Formula [A3] are particularly preferable in terms of polymerization properties, an availability, and obtaining a butene polymer that satisfies the above-mentioned requirements.

[Chem. 3]

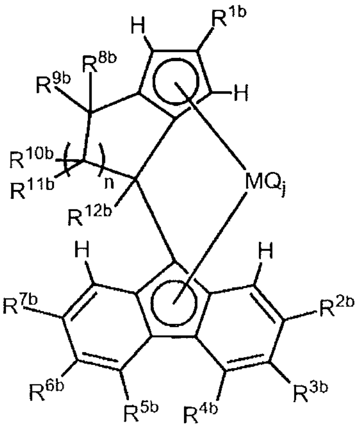

· · · [A 3]

In Formula [A3], $R^{1b}$ is a hydrocarbon group, a silicon-containing group, or a halogen-containing hydrocarbon group; $R^{2b}$ to $R^{12b}$, the same or different, are selected from a hydrogen atom, a hydrocarbon group, a silicon-containing group, a halogen atom, and a halogen-containing hydrocarbon group; and the substituents may combine with each other to form a ring; M is a Group 4 transition metal; n is an integer from 1 to 3; Q is a combination of the same or different kinds, and is selected from a halogen atom, a hydrocarbon group, a neutral conjugated or nonconjugated diene having 10 or less carbon atoms, an anionic ligand, or a neutral ligand capable of being coordinated with a lone pair; and j is an integer from 1 to 4.

<$R^1$ to $R^{10}$ and $R^{1b}$ to $R^{12b}$>

Examples of hydrocarbon groups in $R^1$ to $R^{10}$ and $R^{1b}$ to $R^{12b}$ include linear hydrocarbon groups, branched

hydrocarbon groups, cyclic saturated hydrocarbon groups, cyclic unsaturated hydrocarbon groups, and groups that result from substitution of one or more hydrogen atoms of a saturated hydrocarbon group with a cyclic unsaturated hydrocarbon group. The carbon number of the hydrocarbon group is usually from 1 to 20, preferably from 1 and 15, more preferably 1 to 10.

Examples of linear hydrocarbon groups include: linear alkyl groups such as a methyl group, ethyl group, n-propyl group, n-butyl group, n-pentyl group, n-hexyl group, n-heptyl group, n-octyl group, n-nonyl group, and n-decanyl group; and linear alkenyl groups such as an allyl group.

Examples of branched hydrocarbon groups include branched alkyl groups such as an isopropyl group, tert-butyl group, amyl group, 3-methylpentyl group, 1,1-diethylpropyl group, 1,1-dimethylbutyl group, 1-methyl-1-propylbutyl group, 1,1-propylbutyl group, 1,1-dimethyl-2-methylpropyl group, and 1-methyl-1-isopropyl-2-methylpropyl group.

Examples of cyclic saturated hydrocarbon groups include: cycloalkyl groups such as a cyclopentyl group, cyclohexyl group, cycloheptyl group, cyclooctyl group, and methylcyclohexyl group; and polycyclic groups such as a norbornyl group, adamantyl group, and methyladamantyl group.

Examples of cyclic unsaturated hydrocarbon groups include: aryl groups such as a phenyl group, tolyl group, naphthyl group, biphenyl group, phenanthryl group, and anthracenyl group; cycloalkenyl groups such as a cyclohexenyl group; and polycyclic unsaturated alicyclic groups such as a 5-bicyclo[2.2.1]hepta-2-enyl group.

Examples of groups that result from substitution of one or more hydrogen atoms of a saturated hydrocarbon group with a cyclic unsaturated hydrocarbon group include groups that result from substitution of one or more hydrogen atoms of an alkyl group with an aryl group, which groups are such as a benzyl group, cumyl group, 1,1-diphenylethyl group, and triphenylmethyl group.

Examples of silicon-containing groups in $R^1$ to $R^{10}$ and $R^{1b}$ to $R^{12b}$ include groups represented by the formula, $-SiR_3$ (wherein a plurality of Rs are each independently an alkyl group or a phenyl group having 1 to 15 carbon atoms), such as a trimethylsilyl group, triethylsilyl group, dimethylphenylsilyl group, diphenylmethylsilyl group, and triphenylsilyl group.

Examples of halogen-containing hydrocarbon groups in $R^1$ to $R^{10}$ and $R^{1b}$ to $R^{12b}$ include groups that result from substitution of one or more hydrogen atoms of the above-mentioned hydrocarbon group with a halogen atom, which groups are such as a trifluoromethyl group.

Examples of halogen atoms in $R^2$ to $R^{10}$ and $R^{2b}$ to $R^{12b}$ include a fluorine atom, chlorine atom, bromine atom, and iodine atom.

Among the substituents in $R^2$ to $R^{10}$ and $R^{2b}$ to $R^{12b}$, two substituents (for example, $R^{2b}$ and $R^{3b}$, $R^{3b}$ and $R^{4b}$, $R^{5b}$ and $R^{6b}$, $R^{6b}$ and $R^{7b}$, $R^{Bb}$ and $R^{9b}$, $R^{9b}$ and $R^{10b}$, $R^{10b}$ and $R^{11b}$, $R^{11b}$ and $R^{12b}$) may combine with each other to form a ring, and two or more rings thus formed may be present in the molecule.

In the present Description, examples of rings that two substituents combine with each other to form (a spiro ring, an additional ring) include an alicyclic ring and an aromatic ring. Specific examples thereof include a cyclohexane ring, benzene ring, benzene hydride ring, and cyclopentene ring, and preferably a cyclohexane ring, benzene ring, and benzene hydride ring. In addition, such a ring structure may further have a substituent such as an alkyl group on the ring.

$R^{1b}$ is preferably a hydrocarbon group from a stereoregularity viewpoint, more preferably a hydrocarbon group having 1 to 20 carbon atoms, still more preferably not an aryl group, particularly preferably a linear hydrocarbon group, branched hydrocarbon group, or cyclic saturated hydrocarbon group, most preferably a substituent in which a carbon having a free valency (a carbon bound to a cyclopentadienyl ring) is a tertiary carbon.

Specific examples of $R^{1b}$ include: a methyl group, ethyl group, isopropyl group, tert-butyl group, tert-pentyl group, tert-amyl group, 1-methyl cyclohexyl group, and 1-adamantyl group; more preferably substituents in which a carbon having a free valency is a tertiary carbon, such as a tert-butyl group, tert-pentyl group, 1-methylcyclohexyl group, and 1-adamantyl group; particularly preferably a tert-butyl group and a 1-adamantyl group.

In General Formula [A3], a fluorene ring moiety is not limited to a particular one as long as it is a structure obtained from a known fluorene derivative, and $R^{4b}$ and $R^{5b}$ are preferably hydrogen atoms from a stereoregularity viewpoint and a molecular weight viewpoint.

$R^{2b}$, $R^{3b}$, $R^{6b}$, and $R^{7b}$ are preferably hydrogen atoms or hydrocarbon groups, more preferably hydrocarbon groups, still more preferably hydrocarbon groups having 1 to 20 carbon atoms. In addition, $R^{2b}$ and $R^{3b}$ may combine with each other to form a ring, and, at the same time, $R^{6b}$ and $R^{7b}$ may combine with each other to form a ring. Examples of such substituted fluorenyl groups include: a benzofluorenyl group, dibenzofluorenyl group, octahydrodibenzofluorenyl group, 1,1,4,4,7,7,10,10-octamethyl-2,3,4,7,8,9,10,12-octahydro-1H-dibenzo[b,h]fluorenyl group, 1,1,3,3,6,6,8,8-octamethyl-2,3,6,7,8,10-hexahydro-1H-dicyclopenta[b,h]fluorenyl group, 1',1',3',6',8',8'-hexamethyl-1'H,8'H-dicyclopenta[b,h]fluorenyl group; particularly preferably a 1,1,4,4,7,7,10,10-octamethyl-2,3,4,7,8,9,10,12-octahydro-1H-dibenzo[b,h]fluorenyl group.

$R^{8b}$ is preferably a hydrogen atom.

$R^{9b}$ is more preferably a hydrocarbon group, $R^{9b}$ is still more preferably an alkyl group, cycloalkyl group, or cycloalkenyl group, each of which has two or more carbon atoms, such as a linear alkyl group or a branched alkyl group,

and $R^{9b}$ is particularly preferably an alkyl group having two or more carbon atoms. In addition, $R^{10b}$ and $R^{11b}$ are preferably hydrogen atoms from a synthesis viewpoint.

Alternatively, in the case of n = 1, $R^{9b}$ and $R^{10b}$ more preferably combine with each other to form a ring, and the ring is particularly preferably a 6-membered ring such as a cyclohexane ring. In this case, $R^{11b}$ is preferably a hydrogen atom.

$R^{12b}$ is preferably a hydrocarbon group, and particularly preferably an alkyl group.

<M, Q, n, and j>

M is a Group 4 transition metal, for example, Ti, Zr, or Hf, preferably Zr or Hf, particularly preferably Zr.

Q represents a halogen atom, a hydrocarbon group, a neutral conjugated or nonconjugated diene having 10 or fewer carbon atoms, an anionic ligand, or a neutral ligand capable of being coordinated with a lone pair.

Examples of halogen atoms for Q include a fluorine atom, chlorine atom, bromine atom, and iodine atom.

The hydrocarbon group for Q is preferably alkyl group having 1 to 10 carbon atoms or cycloalkyl group having 3 to 10 carbon atoms. Examples of alkyl group having 1 to 10 carbon atoms include methyl group, ethyl group, n-propyl group, iso-propyl group, 2-methylpropyl group, 1,1-dimethylpropyl group, 2,2-dimethylpropyl group, 1,1-diethylpropyl group, 1-ethyl-1-methylpropyl group, 1,1,2,2-tetramethylpropyl group, sec-butyl group, tert-butyl group, 1,1-dimethylbutyl group, 1,1,3-trimethylbutyl group, and neopentyl group; and examples of cycloalkyl group having 3 to 10 carbon atoms include cyclohexylmethyl group, cyclohexyl group, and 1-methyl-1-cyclohexyl group. It is more preferable for the hydrocarbon group to have 5 or fewer carbon atoms.

Examples of the neutral conjugated or nonconjugated diene having 10 or fewer carbon atoms include s-cis- or s-trans-$\eta^4$-1,3-butadiene, s-cis- or s-trans- $\eta^4$-1,4-diphenyl-1,3-butadiene, s-cis- or s-trans- $\eta^4$-3-methyl-1,3-pentadiene, s-cis- or s-trans- $\eta^4$-1,4-dibenzyl-1,3-butadiene, s-cis- or s-trans- $\eta^4$-2,4-hexadiene, s-cis- or s-trans- $\eta^4$-1,3-pentadiene, s-cis- or s-trans- $\eta^4$-1,4-ditolyl-1,3-butadiene, and s-cis- or s-trans- $\eta^4$-1,4-bis(trimethylsilyl)-1,3-butadiene.

Examples of the anionic ligand include alkoxy groups such as methoxy and tert-butoxy; aryloxy groups such as phenoxy; carboxylate groups such as acetate and benzoate; and sulfonate groups such as mesylate and tosylate.

Examples of the neutral ligand that is capable of being coordinated with a lone pair include organophosphorus compounds such as trimethylphosphine, triethylphosphine, triphenylphosphine, and diphenylmethylphosphine; and ethers such as tetrahydrofuran (THF), diethyl ether, dioxane, and 1,2-dimethoxyethane.

A preferred aspect of Q is a halogen atom or alkyl group having 1 to 5 carbon atoms.

n is an integer from 1 to 3, preferably from 1 or 2, more preferably 1. Having any of the above-mentioned values as n is preferable in terms of efficiently producing the butene polymer.

j is an integer from 1 to 4, preferably 2.

Above, some preferred aspects of the structure of a cross-linked metallocene compound represented by General Formula [A2] or [A3], i.e., $R^1$ to $R^{10}$, $R^{1b}$ to $R^{12b}$, M, n, Q, and j, have been described. In the present invention, any combination of preferred aspects is also a preferable aspect. Such a cross-linked metallocene compound can be suitably used to obtain the butene polymer according to the present invention having the above-mentioned properties.

As a cross-linked metallocene compound represented by General Formula [A3], (8-octamethylfluorene-12'-yl-(2-(adamantane-1-yl)-8-methyl-3,3b,4,5,6,7,7a,8-octahydrocyclopenta[a]indene))zirconium dichloride or (8-(2,3,6,7-tetramethylfluorene)-12'-yl-(2-(adamantane-1-yl)-8-methyl-3,3b,4,5,6,7,7a,8-octahydrocyclopenta[a]indene))zirconium dichloride is particularly preferable. Here, the octamethylfluorene means 1,1,4,4,7,7,10,10-octamethy1-2,3,4,7,8,9,10,12-octahydro-1H-dibenzo[b,h] fluorene.

In addition, other examples of cross-linked metallocene compounds represented by General Formula [A1] include compounds in which $R^A$ and $R^B$, the same or different, are substituted indenyl groups, and Y is a silicon atom. Examples of substituents in substituted indenyl groups include a halogen atom, hydrocarbon group, silicon-containing group, and halogen-containing hydrocarbon group; specific examples thereof include groups described as $R^1$, $R^2$, and the like in Formulae [A2] and [A3]; and examples of the $R^C$, $R^D$, and $MQ_j$ moieties include the same groups as the $R^9$, $R^{10}$, and $MQ_j$ moieties described in the sections of Formulae [A2] and [A3]. Specific examples of such cross-linked metallocene compounds include dimethylsilylene-bis{1-(2-n-propyl-4-phenanthrylindenyl)}zirconium dichloride and dimethylsilylene-bis{1-(2-n-propyl-4-phenanthrylindenyl)}hafnium dichloride.

<Compound (B) >

«Organoaluminum Oxy-compound (b-1)»

Examples of organoaluminum oxy-compounds (b-1) include: known conventional aluminoxanes such as a compound represented by General Formula [B1] and a compound represented by General Formula [B2]; modified methylaluminoxanes having a structure represented by General Formula [B3]; and boron-containing organoaluminum

oxy-compounds represented by General Formula [B4].

[Chem. 4]

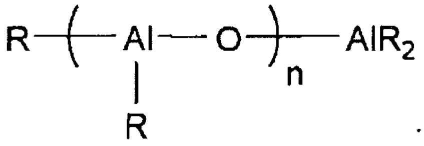

··· [B 1]

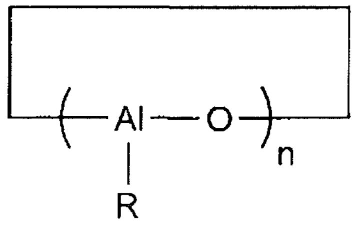

··· [B 2]

In Formulae [B1] and [B2], R is a hydrocarbon group having 1 to 10 carbon atoms, preferably a methyl group, and n is an integer of 2 or higher, preferably 3 or higher, and more preferably 10 or higher. In Formulae [B1] and [B2], methylaluminoxane in which R is a methyl group is preferably used.

[Chem. 5]

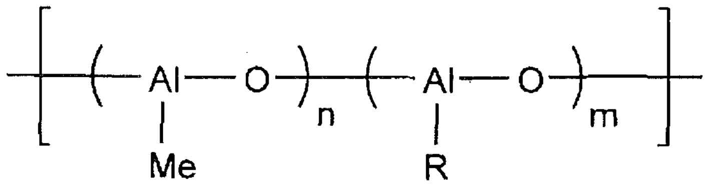

··· [B 3]

In Formula [B3], Me is a methyl group, R is a hydrocarbon group having 2 to 10 carbon atoms, and m and n are each independently an integer of 2 or higher. A plurality of Rs may be the same or different from each other. The modified methylaluminoxane [B3] can be prepared using trimethylaluminum and an alkylaluminum other than trimethylaluminum. The modified methylaluminoxane [B3] is commonly referred to as MMAO (modified methyl aluminoxane). Specifically, MMAO can be prepared using methods in U.S. Patent No. 4960878 and U.S. Patent No. 5041584.

Also, Tosoh Finechem Corporation, for example, commercially produces modified methylaluminoxane prepared by using trimethylaluminum and triisobutylaluminum (i.e., R is isobutyl group in General Formula [B3]) with trade names such as MMAO and TMAO.

MMAO is aluminoxane with improved solubility in various solvents and storage stability. Specifically, MMAO is soluble in aliphatic hydrocarbons, alicyclic hydrocarbons, and aromatic hydrocarbons unlike compounds that are insoluble or slightly soluble in benzenes such as the compounds represented by General Formula [B1] or [B2].

[Chem. 6]

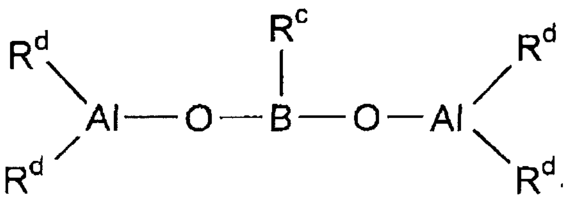

··· [B 4]

In Formula [B4], $R^c$ is a hydrocarbon group having 1 to 10 carbon atoms. A plurality of $R^d$s are each independently

a hydrogen atom, a halogen atom, or a hydrocarbon group having 1 to 10 carbon atoms. Using a production method in which the above-mentioned olefin polymerization catalyst is used, a butene polymer can be produced even at high temperatures such as described below. Therefore, even such organoaluminum oxy-compounds insoluble or poorly soluble in benzene as are cited in JP-A-H02-78687 can be used. Further, organoaluminum oxy-compounds described in JP-A-H02-167305, aluminoxane having two or more types of alkyl groups described in JP-A-H02-24701 and JP-A-H03-103407, and the like can also preferably be used.

Also, organoaluminum oxy-compounds that are "insoluble or poorly soluble in benzene" described above refer to organoaluminum oxy-compounds whose amount of dissolution in benzene of 60°C is, in terms of Al atoms, usually 10 mass% or less, preferably 5 mass% or less, and particularly preferably 2 mass% or less.

The organoaluminum oxy-compound (b-1) as illustrated above may be used singly, or two or more may be used in combination.

«Ionic Compound (b-2)»

Examples of compounds (b-2) that form an ion pair by reacting with a cross-linked metallocene compound (A) (hereinafter also referred to as an "ionic compound (b-2)") include Lewis acids, ionic compounds, borane compounds, and carborane compounds cited in JP-A-H01-501950, JP-A-H01-502036, JP-A-H03-179005, JP-A-H03-179006, JP-A-H03-207703, JP-A-H03-207704, JP-A-2004-051676, U.S. Patent No. 5321106, and the like. Further examples include heteropoly compounds and isopoly compounds. Among these, the ionic compound (b-2) is preferably a compound represented by General Formula [B5].

[Chem. 7]

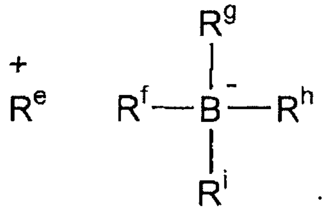

··· [B 5]

In Formula [B5], examples of $R^{e+}$ include $H^+$, oxonium cation, carbenium cation, ammonium cation, phosphonium cation, cycloheptyltrienyl cation, and ferrocenium cation having a transition metal. $R^f$, $R^g$, $R^h$, and $R^i$ are each independently an organic group, preferably aryl group or halogen-substituted aryl group.

Examples of the above-mentioned carbenium cation include trisubstituted carbenium cations such as triphenylcarbenium cation, tris(methylphenyl)carbenium cation, and tris(dimethylphenyl)carbenium cation.

Examples of the ammonium cation include trialkylammonium cations such as trimethylammonium cation, triethylammonium cation, tri(n-propyl)ammonium cation, triisopropylammonium cation, tri(n-butyl)ammonium cation, and triisobutylammonium cation; N,N-dialkylanilinium cations such as N,N-dimethylanilinium cation, N,N-diethylanilinium cation, and N,N,2,4,6-pentamethylanilinium cation; and dialkylammonium cations such as diisopropylammonium cation and dicyclohexylammonium cation.

Examples of phosphonium cations include triarylphosphonium cations such as triphenylphosphonium cation, tris(methylphenyl)phosphonium cation, and tris(dimethylphenyl)phosphonium cation.

Among the above-mentioned examples, $R^{e+}$ is preferably carbenium cation or ammonium cation and particularly preferably triphenylcarbenium cation, N,N-dimethylanilinium cation, or N,N-diethylanilinium cation.

1. $R^{e+}$ is carbenium cation (carbenium salt)

Examples of carbenium salt include triphenylcarbenium tetraphenylborate, triphenylcarbenium tetrakis(pentafluorophenyl)borate, triphenylcarbenium tetrakis(3,5-ditrifluoromethylphenyl)borate, tris(4-methylphenyl)carbenium tetrakis(pentafluorophenyl)borate, and tris(3,5-dimethylphenyl)carbenium tetrakis(pentafluorophenyl)borate.

2. $R^{e+}$ is ammonium cation (ammonium salt)

Examples of ammonium salt include trialkylammonium salt, N,N-dialkylanilinium salt, and dialkylammonium salt.

Specific examples of trialkylammonium salt include triethylammonium tetraphenylborate, tripropylammonium

tetraphenylborate, tri(n-butyl)ammonium tetraphenylborate, trimethylammonium tetrakis(p-tolyl)borate, trimethylammonium tetrakis(o-tolyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis(4-trifluoromethylphenyl)borate, tri(n-butyl)ammonium tetrakis(3,5-ditrifluoromethylphenyl)borate, tri(n-butyl)ammonium tetrakis(o-tolyl)borate, dioctadecylmethylammonium tetraphenylborate, dioctadecylmethylammonium tetrakis(p-tolyl)borate, dioctadecylmethylammonium tetrakis(o-tolyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis(4-trifluoromethylphenyl)borate, and dioctadecylmethylammonium tetrakis(3,5-ditrifluoromethylphenyl)borate.

Specific examples of N,N-dialkylanilium salt include N,N-dimethylanilinium tetraphenylborate, N,N-dimethylanilinium tetrakis(pentafluorophenyl)borate, N,N-dimethylanilinium tetrakis(3,5-ditrifluoromethylphenyl)borate, N,N-diethylanilinium tetraphenylborate, N,N-diethylanilinium tetrakis(pentafluorophenyl)borate, N,N-diethylanilinium tetrakis(3,5-ditrifluoromethylphenyl)borate, N,N,2,4,6-pentamethylanilinium tetraphenylborate, and N,N,2,4,6-pentamethylanilinium tetrakis(pentafluorophenyl)borate.

Specific examples of dialkylammonium salt include diisopropylammonium tetrakis(pentafluorophenyl)borate and dicyclohexylammonium tetraphenylborate.

The ionic compounds (b-2) may be used singly, or two or more may be used in combination.

«Organoaluminum Compounds (b-3)»

Examples of organoaluminum compounds (b-3) include organoaluminum compounds represented by General Formula [B6], and alkyl complex compounds of a Group 1 metal of the periodic system and aluminum which are represented by General Formula [B7].

$$R^a{}_mA1(OR^b)_nH_pX_q \ldots \qquad [B6]$$

In Formula [B6], $R^a$ and $R^b$ are each independently a hydrocarbon group having 1 to 15 carbon atoms, preferably 1 to 4 carbon atoms, X is a halogen atom, m is a number satisfying $0 < m \leq 3$, n is a number satisfying $0 \leq n < 3$, p is a number satisfying $0 \leq p < 3$, q is a number satisfying $0 \leq q < 3$, and $m + n + p + q = 3$.

$$M^2AlR^a{}_4 \ldots \qquad [B7]$$

In Formula [B7], $M^2$ is Li, Na, or K, and a plurality of $R^a$s are each independently a hydrocarbon group having 1 to 15 carbon atoms, preferably 1 to 4 carbon atoms.

Examples of organoaluminum compound [B6] include tri-n-alkylaluminum such as trimethylaluminum, triethylaluminum, tri-n-butylaluminum, trihexylaluminum, and trioctylaluminum; tri-branched alkylaluminum such as triisopropylaluminum, triisobutylaluminum, tri-sec-butylaluminum, tri-tert-butylaluminum, tri2-methylbutylaluminum, tri3-methylhexylaluminum, and tri2-ethylhexylaluminum; tricycloalkylaluminum such as tricyclohexylaluminum and tricyclooctylaluminum; triarylaluminum such as triphenylaluminum and tritolylaluminum; dialkylaluminum hydride such as diisopropylaluminum hydride and diisobutylaluminum hydride; alkenylaluminum such as isoprenylaluminum, represented by the general formula $(i\text{-}C_4H_9)_xAl_y(C_5H_{10})_z$ (In the formula, x, y, and z are positive numbers and $z \leq 2x$.); alkylaluminum alkoxide such as isobutylaluminum methoxide and isobutylaluminum ethoxide; dialkylaluminum alkoxide such as dimethylaluminum methoxide, diethylaluminum ethoxide and dibutylaluminum butoxide; alkylaluminum sesquialkoxide such as ethylaluminum sesquiethoxide and butylaluminum sesquibutoxide; partially alkoxylated alkylaluminum having average composition represented by the formula $R^a{}_{2.5}Al(OR^b)_{0.5}$ (In the formula, $R^a$ and $R^b$ refer to the same $R^a$ and $R^b$ in Formula [B6].); alkylaluminum aryloxide including diethylaluminum phenoxide and diethylaluminum (2,6-di-tert-butyl-4-methylphenoxide); dialkylaluminum halide such as dimethylaluminum chloride, diethylaluminum chloride, dibutylaluminum chloride, diethylaluminum bromide, and diisobutylaluminum chloride; alkylaluminum sesquihalide such as ethylaluminum sesquichloride, butylaluminum sesquichloride and ethylaluminum sesquibromide; partially halogenated alkylaluminum including alkylaluminum dihalide such as ethylaluminum dichloride; partially hydrogenated alkylaluminum including dialkylaluminum hydride such as diethylaluminum hydride and dibutylaluminum hydride, and alkylaluminum dihydride such as ethylaluminum dihydride and propylaluminum dihydride; and partially alkoxylated or partially halogenated alkylaluminum such as ethylaluminum ethoxychloride, butylaluminum butoxychloride, and ethylaluminum ethoxybromide.

Examples of alkyl complex compound [B7] include $LiAl(C_2H_5)_4$ and $LiAl(C_7H_{15})_4$. Further, compounds similar to alkyl complex compound [B7] can also be used, and the examples include organoaluminum compounds having two or more aluminum compounds combined through a nitrogen atom, such as $(C_2H_5)_2AlN(C_2H_5)Al(C_2H_5)_2$.

Organoaluminum compounds (b-3) are preferably trimethylaluminum or triisobutylaluminum because they are

readily available. Further, organoaluminum compounds (b-3) may be used singly, or two or more may be used in combination.

<Carrier (C)>

A carrier (C) may be used as an olefin polymerization catalyst component. The carrier (C) is an inorganic or organic compound in the form of a granular or fine particulate solid.

«Inorganic Compound»

Examples of inorganic compounds include porous oxides, inorganic halides, clay minerals, clays (usually containing the clay minerals as main components), and ion-exchangeable layered compounds (most clay minerals are ion-exchangeable layered compounds.). Examples of porous oxides include $SiO_2$, $Al_2O_3$, MgO, ZrO, $TiO_2$, $B_2O_3$, CaO, ZnO, BaO, and $ThO_2$; and complexes and mixtures containing these oxides. Examples of complexes or mixtures include a natural or synthetic zeolite, $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO. Among these, porous oxides with either one or both of $SiO_2$ and $Al_2O_3$ as the main components are preferred.

The porous oxides have different properties depending on the types and production processes, but they have a particle diameter of preferably 10 to 300 $\mu$m, and more preferably 20 to 200 $\mu$m; a specific surface area of preferably 50 to 1,000 $m^2$/g, and more preferably 100 to 700 $m^2$/g; a pore volume of preferably 0.3 to 3.0 $cm^3$/g. These oxides are used after being calcined at 100 to 1,000°C, preferably at 150 to 700°C, where necessary. Examples of inorganic halides include $MgCl_2$, $MgBr_2$, $MnCl_2$, and $MnBr_2$. These inorganic halides may be used as they are or after being crushed with a ball mill or an oscillating mill. Further, the inorganic halides may be used after being dissolved in solvents such as alcohols and precipitated as fine particles with precipitating agents.

The clays, clay minerals, and ion-exchangeable layered compounds are not limited to natural products and may also be synthetic products. Also, the ion-exchangeable layered compounds are compounds having a crystal structure in which planes formed by bonds such as ionic bonds are stacked in parallel on top of one another with weak bond strength, and in which the ions contained therein are exchangeable.

Specific examples of the clays and the clay minerals include kaolin, bentonite, kibushi clay, gairome clay, allophane, hisingerite, pyrophyllite, mica such as synthetic mica, montmorillonite, vermiculite, chlorite, palygorskite, kaolinite, nacrite, dickite, hectorite, taeniolite, and halloysite; and examples of the ion-exchangeable layered compounds include ion crystalline compounds having layered crystal structures such as hexagonal closest packed structures, antimony structures, $CdCl_2$ structures, and $CdI_2$ structures. Specific examples of the ion-exchangeable layered compounds include crystalline acid salts of polyvalent metals such as $\alpha$-Zr $(HAsO_4)_2.H_2O$, $\alpha$-$Zr(HPO_4)_2$, $\alpha$-$Zr(KPO_4)_2 \cdot 3H_2O$, $\alpha$-$Ti(HPO_4)_2$, $\alpha$-$Ti(HAsO_4)_2 \cdot H_2O$, $\alpha$-$Sn(HPO_4)_2 \cdot H_2O$, $\gamma$-$Zr(HPO_4)_2$, $\gamma$-$Ti(HPO_4)_2$, and $\gamma$-$Ti(NH_4PO_4)_2 \cdot H_2O$.

It is preferable to subject the clays and the clay minerals to chemical treatments. Any chemical treatments may be used, with examples including a treatment to remove impurities on the surface and a treatment to modify the crystal structure of the clay. Specific examples of chemical treatments include acid treatments, alkali treatments, salt treatments, and organic treatments.

Further, the spaces between the layers in the ion-exchangeable layered compounds may be enlarged by exchanging the exchangeable ions between the layers with other larger and bulkier ions utilizing the ion exchange properties. Such bulky ions serve as columns to support the layered structures and are generally called pillars. For example, the oxide columns (pillars) can be formed through the intercalation of the metal hydroxide ions below between the layers of layered compounds followed by thermal dehydration. Also, the introduction of other substances between layers of layered compounds is called intercalation.

Examples of guest compounds to be intercalated include cationic inorganic compounds such as $TiCl_4$ and $ZrCl_4$; metal alkoxides such as $Ti(OR)_4$, $Zr(OR)_4$, $PO(OR)_3$, and $B(OR)_3$ (R is a hydrocarbon group or the like); and metal hydroxide ions such as $[Al_{13}O_4(OH)_{24}]^{7+}$, $[Zr_4(OH)_{14}]^{2+}$, and $[Fe_3O(OCOCH_3)_6]^+$. These guest compounds may be used singly, or two or more may be used in combination.

Further, the intercalation of the guest compounds may be carried out in the presence of polymers obtained by hydrolysis or polycondensation of metal alkoxides such as $Si(OR)_4$, $Al(OR)_3$, and $Ge(OR)_4$ (R is a hydrocarbon group or the like), or in the presence of colloidal inorganic compounds such as $SiO_2$.

Among the inorganic compounds, the clay minerals and the clays are preferable, especially montmorillonite, vermiculite, hectorite, taeniolite, and synthetic mica.

«Organic Compound»

Examples of the organic compounds include granular or fine particulate solids with a particle diameter of 10 to 300 $\mu$m. Specific examples thereof include: (co)polymers synthesized with, as main components, ethylene and an $\alpha$-

olefin having 3 to 20 carbon atoms; (co)polymers synthesized with vinylcyclohexane or styrene as a main component; and the modified products of these (co)polymers.

<Organic Compound Components (D)>

An organic compound component (D) may be used as an olefin polymerization catalyst component. The organic compound component (D) is used, as needed, to improve the polymerization performance in a polymerization reaction of an $\alpha$-olefin and to enhance the properties of the obtainable olefin polymers. Examples of the organic compound component (D) include alcohols, phenolic compounds, carboxylic acids, phosphorus compounds, and sulfonate salts.

<Formation of Olefin Polymerization Catalysts>

In the olefin polymerization using the olefin polymerization catalyst, the components that may form the olefin polymerization catalyst may be used in the following amounts. Furthermore, in the olefin polymerization catalyst, the components content may be set as described below.

(1) In the olefin polymerization using the olefin polymerization catalyst, the cross-linked metallocene compound (A) is usually used in an amount of $10^{-9}$ to $10^{-1}$ mol, preferably $10^{-8}$ to $10^{-2}$ mol per liter of the reaction volume.
(2) When the organoaluminum oxy-compound (b-1) is used as a component of the olefin polymerization catalyst, the compound (b-1) is used in such an amount that the molar ratio [Al/M] of the aluminum atoms (Al) in the compound (b-1) to all the transition metal atoms (M) in the cross-linked metallocene compound (A) is usually 0.01 to 5,000, preferably 0.05 to 2,000.
(3) When the ionic compound (b-2) is used as a component of the olefin polymerization catalyst, the compound (b-2) may be used in such an amount that the molar ratio [(b-2)/M] of the compound (b-2) to all the transition metal atoms (M) in the cross-linked metallocene compound (A) is usually 1 to 10, and preferably 1 to 5.
(4) When the organoaluminum compound (b-3) is used as a component of the olefin polymerization catalyst, the compound (b-3) is used in such an amount that the molar ratio [(b-3)/M] of the compound (b-3) to all the transition metal atoms (M) in the cross-linked metallocene compound (A) is usually 10 to 5,000, preferably 20 to 2,000.
(5) When the organic compound component (D) is used as a component of the olefin polymerization catalyst, the amount thereof may be such that, when the compound (B) is the organoaluminum oxy-compound (b-1), the molar ratio [(D)/ (b-1)] of the organic compound component (D) to the compound (b-1) is usually 0.01 to 10, preferably 0.1 to 5; when the compound (B) is the ionic compound (b-2), the molar ratio [(D)/ (b-2)] of the organic compound component (D) to the compound (b-2) is usually 0.01 to 10, preferably 0.1 to 5; when the compound (B) is the organoaluminum compound (b-3), the molar ratio [(D)/ (b-3)] of the organic compound component (D) to the compound (b-3) is usually 0.01 to 2, preferably 0.005 to 1.

[1-2] Polymerization Method

In the production of the butene polymer according to the present invention, the polymerization may be carried out by any of liquid-phase polymerization methods such as solution polymerization and suspension polymerization, and gas-phase polymerization methods. Examples of inert hydrocarbon solvents used in the liquid-phase polymerization methods include aliphatic hydrocarbons such as propane, butane, pentane, hexane, heptane, octane, decane, dodecane and kerosine; alicyclic hydrocarbons such as cyclopentane, cyclohexane and methylcyclopentane; aromatic hydrocarbons such as benzene, toluene and xylene; and halogenated hydrocarbons such as ethylene chloride, chlorobenzene and dichloromethane. The inert hydrocarbon solvents may be used singly, or two or more may be used in mixture. Also, the so-called bulk polymerization method may be used, in which the liquefied olefin supplied to the polymerization itself is used as the solvent.
In the production method, a temperature for olefin polymerization is usually -50 to +200°C, preferably 0 to 180°C, and a polymerization pressure is usually normal pressure to a gauge pressure of 10 MPa, preferably normal pressure to a gauge pressure of 5 MPa. The polymerization reaction may be carried out batchwise, semi-continuously or continuously. The polymerization may be carried out in two or more stages under different reaction conditions. The molecular weight of the obtainable butene polymer can be adjusted by allowing hydrogen and the like to be present in the polymerization system, by changing the polymerization temperature, or by controlling the amount of the component (B) used.
The production method makes it possible to produce a butene polymer having high stereoregularity, high melting point, and a high molecular weight even under high temperature conditions which are advantageous in industrial production methods, and, at the same time, to maintain high catalytic activity. Under such high temperature conditions, the polymerization temperature is usually 40°C or more, preferably 40 to 200°C, more preferably 45 to 150°C, particularly

preferably 50 to 150°C (in other words, particularly preferably temperatures that are industrially applicable.)

In particular, hydrogen is a preferred additive which may advance the polymerization activity of the catalyst and may increase or decrease the molecular weight of polymers produced. When hydrogen is added to the system, the amount thereof is appropriately about 0.00001 to 100 NL per 1 mol of the olefin. The hydrogen concentration in the system may be controlled by adjusting the amount of hydrogen supplied, or also by performing a reaction in the system which generates or consumes hydrogen, by separating hydrogen with use of a membrane, or by discharging part of the gas containing hydrogen out of the system.

The butene polymer that has been obtained in the production method may be subjected to known post-treatment steps such as a catalyst deactivation step, a residual catalyst removal step, and a drying step, as required, after the polymer is synthesized by the method.

[Resin Composition]

A resin composition according to the present invention contains the butene polymer according to the present invention.

To the butene polymer according to the present invention, at least any one selected from other polymers and additives for resin can be added in accordance with the application to the extent that the effects of the present invention are not impaired, to thereby make a resin composition containing the butene polymer. Hereinafter, the butene polymer according to the present invention is also referred to as a "butene polymer (A)", a polymer different from the butene polymer (A) is also referred to as "(an)other polymer (B)", and an additive for resin is also referred to as an "additive (C)".

In this regard, the resin composition according to the present invention may be one which is partially or wholly graft-modified with a polar monomer. The details of graft-modification will be described below in the «Graft-modification» section.

«Butene Polymer (A)»

The butene polymer (A) content is preferably 0.1 to 99.9 mass% with respect to the total mass of the resin composition according to the present invention, the lower limit is preferably 20 mass%, and in one embodiment, the lower limit of the butene polymer (A) content is, for example, 40 mass%, more preferably 60 mass%, particularly preferably 80 mass%, most preferably 85 mass%.

A part or all of the butene polymer (A) may be graft-modified with a polar monomer as long as the above-mentioned requirements are satisfied. The details of graft-modification will be described below in the «Graft-modification» section.

«Other Polymer (B)»

As other polymers (B), thermoplastic resins different from the butene polymer (A) according to the present invention can be widely used. The other polymer (B) content is preferably 0.001 to 99.9 mass% with respect to the total mass of the resin composition according to the present invention, the upper limit is preferably 80 mass%, and in one embodiment, the upper limit of the other polymer (B) content is more preferably 60 mass%, still more preferably 40 mass%, particularly preferably 20 mass%, most preferably 15 mass%.

Examples of thermoplastic resins are not limited to particular ones as long as they are different from the butene polymer (A) and include:

thermoplastic polyolefin resins, for example: polyethylenes such as low density, intermediate density, and high density polyethylene, and high-pressure low density polyethylene; polypropylenes such as isotactic polypropylene and syndiotactic polypropylene; poly(1-butene), poly(4-methyl-1-pentene), poly(3-methyl-1-pentene), poly(3-methyl-1-butene), ethylene/$\alpha$-olefin copolymers, propylene/$\alpha$-olefin copolymers, 1-butene/$\alpha$-olefin copolymers, 4-methyl-1-pentene/$\alpha$-olefin copolymers, cyclic olefin copolymers, chlorinated polyolefins, and modified polyolefin resins obtainable by modification of these olefin resins
(among the thermoplastic polyolefin resins, for example, polyethylene and polypropylene can also be used as nucleating agents, in which case the preferable content is 0.001 to 5 mass% with respect to the total mass of the resin composition.);
thermoplastic polyamide resins, for example: aliphatic polyamides (nylon 6, nylon 11, nylon 12, nylon 66, nylon 610, and nylon 612);
thermoplastic polyester resins, for example: polyethylene terephthalate, polybutylene terephthalate, and polyester elastomers;
thermoplastic vinyl aromatic resins, for example: polystyrene, ABS resins, AS resins, styrene elastomers (styrene/butadiene/styrene block polymers, styrene/isoprene/styrene block polymers, styrene/isobutylene/styrene block polymers, and hydrogenated products thereof);

thermoplastic polyurethane; vinyl chloride resin; vinylidene chloride resin; acrylic resin; vinyl acetate copolymers such as ethylene/vinyl acetate copolymers; ethylene/methacrylic acid acrylate copolymers; ionomers; ethylene/vinyl alcohol copolymers; polyvinyl alcohol; fluorine resin; polycarbonate; polyacetal; polyphenylene oxide; polyphenylene sulfide polyimide; polyarylate; polysulfone; polyether sulfone; rosin resin; terpene resin and petroleum resin;

copolymer rubbers: for example, ethylene/α-olefin/diene copolymers, propylene/α-olefin/diene copolymers, 1-butene/α-olefin/diene copolymers, polybutadiene rubber, polyisoprene rubber, neoprene rubber, nitrile rubber, butyl rubber, polyisobutylene rubber, natural rubber, silicone rubber; and the like.

Among the thermoplastic resins, preferable are low density, intermediate density, and high density polyethylenes, high-pressure low density polyethylene, isotactic polypropylene, syndiotactic polypropylene, poly(4-methyl-1-pentene), poly(3-methyl-1-pentene), poly(3-methyl-1-butene), ethylene/α-olefin copolymers, propylene/α-olefin copolymers, 1-butene/α-olefin copolymers, 4-methyl-1-pentene/α-olefin copolymers, styrene elastomers, vinyl acetate copolymers, ethylene/methacrylic acid acrylate copolymers, ionomers, fluorine resin, rosin resin, terpene resin, and petroleum resin; and more preferable are polyethylene, isotactic polypropylene, syndiotactic polypropylene, ethylene/α-olefin copolymers, propylene/a-olefin copolymers, 1-butene/α-olefin copolymers, 4-methyl-1-pentene/α-olefin copolymers, vinyl acetate copolymers, styrene elastomers, rosin resin, terpene resin, and petroleum resin, from heat resistance improvement, low temperature resistance improvement, and flexibility viewpoints.

A part or all of the other polymer (B) may be graft-modified with a polar monomer. The details of graft-modification will be described below in the «Graft-modification» section.

The other polymers (B) may be used singly, or two or more may be used in combination.

«Additive (C)»

Examples of the additives (C) include nucleating agents, antiblocking agents, pigments, dyes, fillers, lubricants, plasticizers, mold release agents, antioxidants, flame retardants, ultraviolet absorbers, antimicrobial agents, surfactants, antistatic agents, weather-resistant stabilizers, heat-resistant stabilizers, anti-slip agents, foaming agents, crystallization aids, anti-fogging agents, age resistors, hydrochloric acid absorbers, impact modifiers, cross-linking agents, co-cross-linking agents, cross-linking aids, adhesives, softeners, and processing aids.

The additives (C) may be used singly, or two or more may be used in combination.

The additive (C) content is not limited to a particular value and depends on the application to the extent that an object of the present invention is not impaired, and the amounts of the additives to be blended are each preferably 0.001 to 30 mass% with respect to the total mass of the resin composition according to the present invention.

As a nucleating agent, a known nucleating agent can be used to further improve the moldability of the resin composition, i.e., to achieve a higher crystallization temperature and a higher crystallization speed. Specific examples thereof include dibenzylidene sorbitol nucleating agents, phosphate ester nucleating agents, rosin nucleating agents, benzoic acid metal salt nucleating agents, fluorinated polyethylene, sodium 2,2-methylenebis(4,6-di-t-butylphenyl)phosphate, pimelic acid and salts thereof, 2,6-naphthalenedicarboxylic acid dicyclohexylamide, ethylenebisstearic acid amide, and the like.

The blending amount of the nucleating agent is not limited to a particular value and is preferably 0.001 to 5 parts by mass with respect to the total amount of the butene polymer (A) and the other polymer (B) as 100 parts by mass. The nucleating agent can be added during polymerization, after polymerization, during molding, or the like, if appropriate.

As the antiblocking agent, any known antiblocking agent can be used. Specific examples thereof include fine powder silica, fine powder aluminum oxide, fine powder clay, powdered or liquid silicon resin, tetrafluoroethylene resin, fine powder cross-linked resin, for example, cross-linked acryl/methacryl resin powder, amide-based lubricant, and the like. Among these, fine powder silica, cross-linked acryl/methacryl resin powder are preferable.

Examples of pigments include inorganic pigments (titanium oxide, iron oxide, chromium oxide, cadmium sulfide, and the like) and organic pigments (azo lake-based, thioindigo-based, phthalocyanine-based, and anthraquinone-based ones). Examples of dyes include azo-based dyes, anthraquinone-based dyes, triphenylmethane-based dyes, and the like. The addition amounts of these pigments and dyes are not limited to particular values, and are a total of usually 5 mass% or less, preferably 0.1 to 3 mass% with respect to the total mass of the resin composition according to the present invention.

Examples of fillers include glass fibers, carbon fibers, silica fibers, metal fibers (stainless steel, aluminum, titanium, copper, and the like), carbon black, silica, glass beads, silicates (calcium silicate, talc, clay, and the like), metal oxides (iron oxide, titanium oxide, alumina, and the like), metal carbonates (calcium sulfate, barium sulfate), various metal powders (magnesium, silicon, aluminum, titanium, copper, and the like), mica, and glass flakes.

Examples of lubricants include waxes (carnauba wax and the like), higher fatty acids (stearic acid and the like), higher alcohols (stearyl alcohol and the like), and higher fatty acid amides (stearic acid amide and the like).

Examples of plasticizers include aromatic carboxylate esters (dibutyl phthalate and the like), aliphatic carboxylate esters (methylacetyl ricinoleate and the like), aliphatic dicarboxylate esters (adipic acid-propylene glycol-based polyester and the like), aliphatic tricarboxylates (triethyl citrate and the like), trialkyl phosphates (triphenyl phosphate and the like), epoxy fatty acid esters (epoxy butyl stearate and the like), and petroleum resins.

Examples of mold release agents include higher fatty acid lower (C1-C4) alcohol esters (butyl stearate and the like), fatty acid (C4-C30) polyhydric alcohol esters (hydrogenated castor oil and the like), fatty acid glycol esters, a liquid paraffin.

As the antioxidants, known antioxidants can be used. Specific examples thereof include phenol-based (2,6-di-t-butyl-4-methylphenol and the like), polycyclicphenol-based (2,2'-methylenebis(4-methyl-6-t-butylphenol and the like), phosphorus-based (tri(2,4-di-t-butylphenyl)phosphate, tetrakis(2,4-di-t-butylphenyl)-4,4-biphenylene diphosphonate and the like), sulfur-based (dilauryl thiodipropionate and the like), amine-based (N,N-diisopropyl-p-phenylene diamine and the like), and lactone-based antioxidants, and the like.

Examples of flame retardants include organic flame retardants (nitrogen-containing, sulfur-containing, silicon-containing, and phosphorus-containing ones, and the like) and inorganic flame retardants (antimony trioxide, magnesium hydroxide, zinc oxide, red phosphorus, and the like).

Examples of ultraviolet absorbers include benzotriazole-based, benzophenon-based, salicylate-based, and acrylate-based ultraviolet absorbers.

Examples of antimicrobial agents include quarternary ammonium salts, pyridine-based compounds, organic acids, organic acid esters, halogenated phenols, and organic iodine.

Examples of surfactants include nonionic, anionic, cationic, and amphoteric surfactants. Examples of nonionic surfactants include: polyethylene glycol type nonionic surfactants such as higher alcohol ethylene oxide adducts, fatty acid ethylene oxide adducts, higher alkylamine ethylene oxide adducts, and polypropylene glycol ethylene oxide adducts; and polyhydric alcohol type nonionic surfactants such as polyethylene oxides, glycerin fatty acid esters, pentaerythritol fatty acid esters, sorbit or sorbitan fatty acid esters, polyhydric alcohol alkyl ethers, and alkanolamine aliphatic amides. Examples of anionic surfactants include: sulfate ester salts such as higher fatty acid alkali metal salt; sulfonates such as alkyl benzene sulfonate, alkyl sulfonate, and paraffin sulfonate; and phosphate ester salts such as higher alcohol phosphate ester salt. Examples of cationic surfactants include quarternary ammonium salts such as alkyltrimethyl ammonium salt. Examples of amphoteric surfactants include: amino acid type amphoteric surfactants such as higher alkyl aminopropionate; and betaine type amphoteric surfactants such as higher alkyldimethyl betaine and higher alkyldihydroxyethyl betaine.

Examples of antistatic agents include the above-mentioned surfactants, fatty acid esters, and high polymer type antistatic agents. Examples of fatty acid esters include stearate esters and oleate esters, and examples of high polymer type antistatic agents include polyetherester amides.

Examples of heat-resistant stabilizers include conventional known stabilizers such as amine-based stabilizers, phenol-based stabilizers, and sulfur-based stabilizers. Specific examples thereof include: aromatic secondary amine-based stabilizers such as phenylbutyl amine and N,N'-di-2-naphthyl-p-phenylene diamine; phenol-based stabilizers such as dibutylhydroxy toluene, tetrakis[methylene(3, 5-di-t-butyl-4-hydroxy)hydrocinnamate]methane, and octadecyl 3-(3,5-di-t-butyl-4-hydroxyphenyl)propionate; thioether-based stabilizers such as bis[2-methyl-4-(3-n-alkylthiopropionyloxy)-5-t-butyl phenyl]sulfide; dithiocarbamate-based stabilizers such as dibutyldithiocarbamate nickel; 2-mercaptobenzoylimidazole zinc salt and 2-mercaptobenzoimidazole; sulfur-based stabilizers such as dilaurylthiodipropionate and distearylthiodipropionate; and the like. These stabilizers may be used singly, or two or more kinds may be used in combination.

Examples of usable cross-linking agents include organic peroxides.

Examples of organic peroxides include dicumyl organic peroxide, di-tert-butyl organic peroxide, 2,5-dimethyl-2,5-di-(tert-butylperoxy)hexane, 2,5-dimethyl-2,5-di-(tert-butylperoxy)hexyne-3,1,3-bis (tert-butylperoxyisopropyl)benzene, 1,1-bis(tert-butylperoxy)-3,3,5-trimethylcyclohexane, n-butyl-4,4-bis(tert-butylperoxy)valerate, benzoyl organic peroxide, p-chlorobenzoylperoxide, 2,4-dichlorobenzoyl organic peroxide, tert-butylperoxybenzoate, tert-butylperbenzoate, tert-butylperoxyisopropylcarbonate, diacetyl organic peroxide, lauroyl organic peroxide, and tert-butylcumyl organic peroxide.

The organic peroxide is used at a ratio of preferably 0.05 to 10 parts by mass with respect of the total amount of the butene polymer (A) and the other polymer (B) as 100 parts by mass.

Sulfur, p-quinonedioxime, p,p'-dibenzoylquinonedioxime, N-methyl-N-4-dinitrosoaniline, nitrosobenzene, diphenylguanidine, a peroxy cross-linking aid such as trimethylolpropane-N,N'-m-phenylene dimaleimide, divinylbenzene, triallylcyanurate, ethylene glycol dimethacrylate, diethylene glycol dimethacrylate, polyethylene glycol dimethacrylate, trimethylol propane trimethacrylate, a multifunctional methacrylate monomer such as allylmethacrylate, vinyl butyrate, or a multifunctional vinyl monomer such as vinyl stearate can be added as a cross-linking aid in cross-linking treatment with an organic peroxide.

Using the above-mentioned compound allows a uniform and relaxing cross-linking reaction to be expected. In particular, divinylbenzene is suitably used in the present invention. Divinylbenzene is easy to handle, has good compatibility with polymers, acts to solubilize organic peroxides, and serves as a dispersing agent for organic peroxides. This provides a homogeneous cross-linking effect and affords a dynamically heat-treated product well-balanced between flowability and properties.
The cross-linking aid is preferably used in a ratio of 0.05 to 10 parts by mass with respect to the total amount of the butene polymer (A) and the other polymer (B) as 100 parts by mass.
Examples of softeners include: mineral oil-based softeners such as process oil, lubricating oil, paraffin, liquid paraffin, petroleum asphalt, and vaseline; coal tar-based softeners such as coal tar and coal tar pitch; fatty oil-based softeners such as castor oil, rapeseed oil, soybean oil, and coconut oil; waxes such as tall oil, beeswax, carnauba wax, and lanolin; fatty acids such as ricinoleic acid, palmitic acid, stearic acid, barium stearate, and calcium stearate, or metal salts thereof; synthetic high polymer substances such as naphthenic acid or metal soap thereof, pine oil, rosin or derivatives thereof, terpene resin, petroleum resin, coumarone indene resin, and atactic polypropylene; ester-based plasticizers such as dioctyl phthalate, dioctyl adipate, and dioctyl sebacate; carbonate ester-based plasticizers such as diisododecyl carbonate; besides, microcrystalline wax, sub(factice), liquid polybutadiene, modified liquid polybutadiene, liquid thiokol, hydrocarbon-based synthetic lubricating oil; and the like. Among these, petroleum-based softeners and hydrocarbon-based synthetic lubricating oils are preferable.
The amount of the softener is not limited to a particular value and is preferably 1 to 200 parts by mass with respect to the total amount of the butene polymer (A) and the other polymer (B) as 100 parts by mass. Softeners facilitate processing in preparing a resin composition and help the dispersion of carbon black and the like.

«Graft-modification»

Examples of polar monomers used for graft-modification include hydroxyl group-containing ethylenic unsaturated compounds, amino group-containing ethylenic unsaturated compounds, epoxy group-containing ethylenic unsaturated compounds, aromatic vinyl compounds, unsaturated carboxylic acids or derivatives thereof, vinyl ester compounds, vinyl chloride, and carbodiimide compounds. In particular, unsaturated carboxylic acids or derivatives thereof are preferable. Examples of unsaturated carboxylic acids or derivatives thereof include unsaturated compounds having one or more carboxylic groups, esters between a compound having a carboxylic group and an alkyl alcohol, and unsaturated compounds having one or more anhydrous carboxylic groups. Examples of unsaturated groups include vinyl groups, vinylene groups, and unsaturated cyclic hydrocarbon groups.
Specific examples of polar monomers include unsaturated carboxylic acids such as acrylic acid, maleic acid, fumaric acid, tetrahydrophthalic acid, itaconic acid, citraconic acid, crotonic acid, isocrotonic acid, and nadic acid [trademark] (endocis-bicyclo[2.2.1]hepto-5-ene-2,3-dicarboxylic acid), and examples of derivatives of unsaturated carboxylic acids include acid halides, amides, imides, anhydrides, and esters. Specific examples of such derivatives include maleyl chloride, maleimide, maleic anhydride, citraconic anhydride, monomethyl maleate, dimethyl maleate, and glycidyl maleate.
These unsaturated carboxylic acids and/or derivatives thereof may be used singly, or two or more may be used in combination. Among these, unsaturated dicarboxylic acids or acid anhydrides thereof are preferred, and maleic acid, nadic acid, or acid anhydrides thereof are particularly preferably used.
The modification can be carried out by graft polymerization of a polar monomer onto an object to be modified. In graft polymerization of a polar monomer onto an object to be modified, the polar monomer is used in an amount of usually 1 to 100 parts by mass, preferably 5 to 80 parts by mass, with respect to 100 parts by mass of an object to be modified. This graft polymerization is usually carried out in the presence of a free-radical initiator.
As a free-radical initiator, an organic peroxide, an azo compound, and the like can be used. A free-radical initiator can be used to be mixed, as it is, with an object to be modified and a polar monomer and can also be used as a material dissolved in a small amount of organic solvent. The organic solvent is not limited to a particular one but is usable as long as it is an organic solvent capable of dissolving a free-radical initiator.
In graft polymerization of a polar monomer onto an object to be modified, a reducing substance may be used. Using a reducing substance enables the grafting amount of a polar monomer to be enhanced.
An object to be modified can be graft-modified with a polar monomer using a conventional known method, for example, by dissolving the object to be modified in an organic solvent, then adding a polar monomer, a free-radical initiator, and the like to the obtained solution, and allowing the resulting mixture to react at a temperature of usually 70 to 200°C, preferably 80 to 190°C, for usually 0.5 to 15 hours, preferably 1 to 10 hours.
In addition, a resin composition containing a modified product can be produced using an extruder and the like to allow a reaction between an object to be modified and a polar monomer. This reaction is usually carried out at the melting point of the object to be modified or a higher temperature. Specifically, in the case of the modification of a thermoplastic resin, it is desirable that the modification be carried out, for example, at a temperature of usually 120 to

300°C, preferably 120°C to 250°C, for usually 0.5 to 10 minutes. Specifically, in the case of the modification of the butene polymer according to the present invention, it is desirable that the modification be carried out, for example, at a temperature of usually 160 to 300°C, preferably 180°C to 250°C, for usually 0.5 to 10 minutes.

The modification amount of a modified product thus obtained (the graft amount of the polar monomer) is usually 0.1 to 50 mass%, preferably 0.2 to 30 mass%, more preferably 0.2 to 10 mass%, with respect to 100 mass% of the modified product.

In the present invention, a resin composition can also be obtained by kneading the above-mentioned modified product and one or more unmodified substances selected from unmodified substances of the butene polymers (A) and unmodified substances of the other polymers (B).

Alternatively, the modification can also be carried out through allowing the resin composition according to the present invention to contain a polar monomer. The polar monomer content is not limited to a particular value, and is preferably 0.001 to 50 mass%, more preferably 0.001 to 10 mass%, still more preferably 0.001 to 5 mass%, most preferably 0.01 to 3 mass%, with respect to 100 mass% of the resin composition. The polar monomer content can be easily designed in accordance with the purpose, for example, through selecting graft conditions as appropriate.

In addition, the graft-modification can be carried out through using a silane coupling agent. Examples of silane coupling agents include vinyltrimethoxysilane, vinyltriethoxysilane, vinyltris(2-methoxyethoxy)silane, vinyltrichlorsilane, N-(2-aminoethyl)-3-aminopropylmethyldimethoxysilane, N-(2-aminoethyl)-3-aminopropyltrimethoxysilane, 3-aminopropyltriethoxysilane, N-2-(aminoethyl)-3-aminopropyltriethoxysilane, 3-aminopropyltrimethoxysilane, 3-aminopropyltriethoxysilane, N-phenyl-3-aminopropyltrimethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, 3-isocyanate propyltriethoxysilane, 3-methacryloxypropyltrimethoxysilane, 3-methacryloxypropylmethyldimethoxysilane, 3-methacryloxypropylmethyldiethoxysilane, 3-methacryloxypropyltriethoxysilane, 3-mercaptopropyltrimethoxysilane, 3-ureidopropyltriethoxysilane, N-(1,3-dimethylbutylidene)-3-(triethoxysilyl)-1-propane amine, N,N'-bis(3-(trimethoxysilyl)propyl)ethylene diamine, polyoxyethylene propyltrialkoxysilane, polyethoxydimethylsiloxane, p-styryltrimethoxysilane, and 3-acryloxypropyltrimethoxysilane.

Either a dry type treatment method or a wet type (slurry type) treatment method may be used for cross-linking with a silane coupling agent. Water cross-linking of a polymer using a silane coupling agent can afford uniform crosslinkage and is used for applications that require strength and durability, such as industrial electrical wires and pipes.

Using a modified product affords excellent adhesiveness and compatibility with another resin and also may improve the wettability of the surface of a molded article obtained. In addition, using a modified product may add compatibility or adhesiveness with another material.

In addition, having the graft amount of a polar monomer (for example, an unsaturated carboxylic acid and/or a derivative thereof) in the above-mentioned range allows a composition containing a grafted product of the butene polymer according to the present invention and/or a grafted product of the above-mentioned thermoplastic resin to exhibit high adhesive strength to polar-group-containing resins (for example, polyesters, polyvinylalcohols, ethylene/vinylalcohol copolymers, polyamides, PMMA, polycarbonates, and the like).

[Method of Producing Resin Composition]

Methods of producing a resin composition of the present invention are not limited to particular ones, and the resin composition is obtained, for example, by mixing the butene polymer according to the present invention and, if necessary, any other component at the above-mentioned addition ratio, followed by melt-kneading the resultant mixture.

Melt-kneading methods are not limited to particular ones and can be carried out using a generally commercially available melt-kneading device such as an extruder. For example, a kneading step in which a melt-kneading device is used is carried out at a temperature of usually 120 to 250°C, preferably 120 to 230°C. The kneading time is usually 0.5 to 30 minutes, particularly preferably 0.5 to 5 minutes.

[Molded Article]

Various molded articles formed from the butene polymer according to the present invention or a resin composition containing the butene polymer can widely be used in conventional known polyolefin applications. Molded articles can be obtained using, for example, a known heat forming method such as extrusion molding, injection molding, inflation molding, blow molding, extrusion blow molding, injection blow molding, press molding, vacuum molding, powder slush molding, calender molding, or foam molding.

The thickness of a molded article is not limited to a particular value, can be determined as appropriate in accordance with the application, and is in the range of usually 0.1 to 20 mm, preferably 0.15 to 10 mm (except in the case of a stretched film). This range affords a good balance between stiffness and uniform processability.

The extrusion molded article is not limited to a particular shape or product type. Examples thereof include

sheets, stretched or unstretched films, pipes, hoses, electrical wire coatings, and tubes, and, above all, include sheets (skin materials), films, tubes, catheters, monofilaments, multifilaments, and nonwoven fabrics.

For extrusion molding, a conventional known extrusion device and mold conditions can be adopted, and, for example, a molten butene polymer or resin composition can be extruded from a specific die using a single screw extruder, knead extruder, ram extruder, gear extruder, and the like and thereby molded into a desired shape.

A stretched film can be obtained by stretching such an extruded sheet or an extruded unstretched film as above-mentioned using, for example, a known stretching method such as a tenter method (machine direction and transverse direction stretching, or transverse direction and machine direction stretching), a simultaneous biaxial stretching method, or a uniaxial stretching method. The stretch ratio at which a sheet or an unstretched film is stretched is usually about 20 times to 70 times in biaxial stretching and usually about 2 to 10 times in uniaxial stretching. Stretching can afford a stretched film having a thickness of 1 to 500 $\mu$m, preferably about 5 to 200 $\mu$m.

Molded filament articles can be produced, for example, by extruding a molten butene polymer or resin composition through a spinneret. The filaments thus obtained may further be stretched. This stretching has only to be carried out in such a way as to allow at least the uniaxial direction of the filaments to be molecularly-oriented and is desirably carried out at a stretch ratio of usually about 5 to 10 times. The filaments have excellent transparency, stiffness, heat resistance, impact resistance, and stretchability. Specifically, nonwoven fabrics can be produced using a spunbonding method or a melt-blowing method.

Injection molded articles can be produced by injection-molding the butene polymer or a resin composition thereof into various shapes using a conventional known injection molding device and adopting known conditions. Injection molded articles are not easily charged electrically, have excellent transparency, stiffness, heat resistance, impact resistance, surface gloss, chemical resistance, and abrasion resistance, and can be widely used for pipe joints, interior automotive trim materials, exterior automotive trim materials, home electrical appliance housings, and containers.

As an example of films, inflation films can be produced. Inflation films can suitably be used, for example, as materials such as those for daily goods packages, food packages, food containers, retortable containers, protection films, decorative film sheets, shrink films, infusion solution bags, heat seal films, stretched films, raw material films for stretching, and medical containers.

Here, shrink films can be obtained by uniaxially or biaxially stretching films composed of the butene polymer according to the present invention or a resin composition thereof in the temperature range of usually 60 to 100°C, preferably 60 to 80°C. Examples of stretching methods include a conventionally common method of stretching polyolefin resin films (for example, uniaxial stretching and biaxial stretching) and include, for example, a uniaxial stretching method based on a heating roller, and, in addition, examples of biaxial stretching methods include a simultaneous biaxial stretching method based on a tubular method, a sequential biaxial stretching method based on a heating roller/tenter, and a simultaneous biaxial stretching method based on a tenter. The stretch ratio of a film is usually 3 times or more, preferably 3 to 10 times, more preferably 4 to 8 times.

In addition, the sheets and films are not easily charged electrically, have excellent stiffness such as Young's modulus, heat resistance, stretchability, impact resistance, aging resistance, transparency, see-through properties, gloss, and heat-sealing properties, and can widely be used as packaging films, protection films, and the like. In this case, the sheets and films may be laminates (layered sheets or films).

Here, layered films can be produced using various known production methods such as: a method in which the butene polymer according to the present invention or a resin composition thereof is extruded and layered on at least one side of a base material film; a method in which a base material film and a film composed of the butene polymer according to the present invention or a resin composition thereof are dry-laminated using an anchor coat agent; a method in which a thermoplastic polymer as a raw material for a base material film and the butene polymer according to the present invention or a resin composition thereof are coextruded using a multilayer die to afford a film; or the like. In the layered film according to the present invention, a film composed the butene polymer composition has a thickness of usually 5 to 500 $\mu$m, preferably 10 to 300 $\mu$m, more preferably 20 to 200 $\mu$m.

Blow molded articles can be produced by blow molding the butene polymer or a resin composition thereof using a conventional known blow molding device and adopting known conditions. In this case, the blow molded articles may be multilayer molded articles.

For example, in extrusion blow molding, the butene polymer or a resin composition thereof in a molten state at a resin temperature of 100°C to 300°C is extruded from a die to form a tubular parison, then the parison is held in a mold having a desired shape, air is blown thereinto, and the parison is fitted in the mold at a resin temperature of 130°C to 300°C, whereby a hollow molded article can be produced. The stretch (blow) ratio is preferably about 1.5 to 5 times in the transverse direction.

For example, in injection blow molding, the butene polymer or a resin composition thereof at a resin temperature of 100°C to 300°C is injected into a parison mold to form a parison, then the parison is held in a mold having a desired shape, air is blown thereinto, and the parison is fitted in the mold at a resin temperature of 120°C to 300°C, whereby a hollow molded article can be produced. The stretch (blow) ratio is preferably 1.1 to 1.8 times in the machine direction

and 1.3 to 2.5 times in the transverse direction.

The blow molded articles have excellent transparency, stiffness or flexibility, heat resistance, and impact resistance, and excellent moisture resistance as well. The blow molded articles can be used for, for example, containers, bottles, and cups for foods, flavorings, cosmetics, hairdressings, drinking water, refreshing beverages, carbonated beverages, alcohols, bleaches, detergents, shampoos, rinses, conditioners, softeners, fabric softeners, pharmaceuticals, adhesives, agricultural chemicals, medical treatment, infant feeding bottles, experimental instruments, kerosene cans, and gasoline tanks for electric generators/lawn mowers/motorcycles/automobiles/and the like.

For example, in press molding, a melt kneaded product of the butene polymer or a resin composition thereof is pressed at 5 to 20 MPa for 1 to 15 minutes using a press set at 120 to 250°C. If necessary, the product is pressed and cooled at 5 to 20 MPa for 1 to 15 minutes using a press set at 10 to 20°C. In this way, a press sheet can be obtained. The press sheet has a thickness of, for example, 0.1 to 6.0 mm.

Examples of press molded articles include mold stamped articles, and the butene polymer or a resin composition thereof can be used as, for example, a base material for composite integration molding (mold stamping) of the base material and a skin material by pressing both thereof simultaneously. Specific examples of mold stamped articles include interior automotive trim materials such as door trim materials, rear package trim materials, seat back garnishes, and instrument panels. The press molded articles are not easily charged electrically and have excellent stiffness or flexibility, heat resistance, transparency, impact resistance, aging resistance, surface gloss, chemical resistance, abrasion resistance, and the like.

In a case where a molded article is produced using a vacuum molding method, the butene polymer or a resin composition thereof is vacuum molded, for example, after it is formed into a sheet or film by a known extrusion processing method beforehand. The thickness of the sheet or film is not limited to a particular value, and is preferably, for example, 0.1 to 3 mm.

Vacuum molding methods are not limited to particular ones. A fabricated molded article can usually be produced by thermally softening a molded article in sheet or film form to fit it into a mold, discharging air through an exhaust outlet provided in the mold to thereby fit the molded article closely in the mold, and then cooling the article.

The surface temperature of the molded article in vacuum molding is usually in the temperature range of 120 to 250°C, preferably in the temperature range of 120 to 220°C, more preferably in the temperature range of 120 to 200°C. Having the surface temperature in the range affords good drawdown properties and shaping properties and a uniform thickness.

The vacuum molded articles can suitably be used for, for example, interior automobile trim materials, exterior automotive trim materials, packaging cases, protection cases, protection sheets, containers for foods/beverages/and the like, bottles, cups, information terminal cases, information terminal protection covers, display material frames/covers, furniture, and furniture frameworks.

According to the present invention, vacuum molded articles such as interior skin materials such as automotive instrument panels and door trim materials can also be produced. The molded articles are not easily charged electrically and have excellent flexibility, heat resistance, impact resistance, aging resistance, surface gloss, chemical resistance, and abrasion resistance.

According to the present invention, powder slush molded articles such as automotive parts, home electrical appliances parts, toys, and sundries can also be produced. The molded articles are not easily charged electrically and have excellent flexibility, heat resistance, impact resistance, aging resistance, surface gloss, chemical resistance, and abrasion resistance.

Examples of molded articles according to the present invention also include multilayer molded articles having at least one layer composed of the butene polymer according to the present invention or a resin composition thereof. The multilayer molded article is a molded article having layers at least one of which is a layer formed from the butene polymer according to the present invention or a resin composition thereof. Specific examples thereof include a multilayer film, a multilayer sheet, a multilayer container, a multilayer tube, a multilayer pipe, and a multilayer coating film laminate in which that is contained as one component of a water-based coating material.

The butene polymer according to the present invention or a resin composition thereof is suitable as, for example, a formation material for containers or nonwoven fabrics. Examples of containers include frozen storage containers, food containers such as retortable pouches, and bottle containers. Examples thereof also include medical containers and infusion solution bags.

The butene polymer according to the present invention and a resin composition containing it have the above-mentioned properties and accordingly can be utilized for molded articles formed into various shapes, such as pipes, pipe joints, tanks such as blow tanks, sheets, unstretched or stretched films, filaments, and others. Examples of blow tanks include water supply tanks and hot water supply tanks. Among these, pipes and pipe joints are preferable and are not only used for gas transport and the like but also more preferably used as liquid transport pipes and joints thereof such as those for water supply/hot water supply, underfloor heating, hot water heating, hot spring piping, chemical spray, drainage, sprinkling, washing machines, dishwashers, toilets, bath rooms, solar systems, mist generators, and agriculture, and pipes and joints for water supply and hot water supply are particularly preferable.

EXAMPLES

The present invention will be described in detail with reference to Examples, but is not limited to these Examples.

[Synthesis of Transition Metal Complex]

[Production Example 1]

In accordance with Synthesis Example 4 of WO 2014/050817, (8-octamethylfluorene-12'-yl -(2-(adamantane-1-yl)-8-methyl-3,3b,4,5,6,7,7a,8-octahydrocyclopenta[a]indene))zirconium dichloride was synthesized. This compound is also described as "catalyst (a)".

[Production Example 2]

With reference to the Production Example of the catalyst (a), (8-(2,3,6,7-tetramethylfluorene)-12'-yl-(2-(adamantane-1-yl)-8-methyl-3,3b,4,5,6,7,7a,8-octahydrocyclopenta[a]indene))zirconium dichloride was synthesized. This compound is also described as "catalyst (b)".

[Production Example 3]

In accordance with Journal of Organometallic Chem. 288(1985), pages 63-37, and the Description and Examples of EP0320762A, dimethylsilylene-bis{1-(2-n-propyl-4-phenanthrylindenyl)}zirconium dichloride was synthesized. This compound is also described as "catalyst (c)".

[Production Example 4]

In accordance with Production Example 3, dimethylsilylene-bis{1-(2-n-propyl-4-phenanthrylindenyl)}hafnium dichloride was synthesized. This compound is also described as "catalyst (d)".

[Example 1] 1-Butene/Propylene Copolymer

A Schlenk flask was thoroughly dried and purged with nitrogen, a magnetic stir bar was added thereto, 2.0 pmol of the catalyst (a) as a metallocene compound was added, a 300 eq suspension of modified methyl aluminoxane (0.60 mmol in terms of aluminum atoms, an n-hexane solvent) with respect to the catalyst (a) was added with stirring at room temperature, and then heptane was added in such an amount as to make the catalyst (a) contained at 1 μmol/mL, to give a catalyst liquid.

In a 1500 ml-volume SUS autoclave that had been thoroughly dried and purged with nitrogen, 500 mL of heptane as a polymerization solvent and 1.5 mL of hexane solution (Al = 0.5 M, 0.75 mmol) of triisobutylaluminum were loaded. Then, to the resultant mixture, 180 g of 1-butene was added with stirring at 850 RPM, followed by heating to a polymerization temperature of 60°C. At this temperature, 213 NmL of hydrogen was added, then nitrogen was added until the autoclave internal pressure became 0.57 MPaG, and the autoclave was further pressurized under propylene until the total pressure became 0.6 MPaG.

The autoclave was fed with the catalyst liquid prepared above, thereby allowing polymerization to be initiated, propylene was supplied such that the total pressure of 0.6 MPaG was maintained until the termination of polymerization, and 10 minutes after the initiation of polymerization, methanol was added to terminate the polymerization.

The autoclave was cooled and depressurized, and the resultant polymerization liquid was taken out of the autoclave and charged into methanol to precipitate a polymer, which was recovered by filtration. The polymer obtained was dried under reduced pressure at 80°C for 12 hours, thereby affording 109.7 g of the polymer for evaluation.

[Example 2] 1-Butene/Propylene Copolymer

The procedures in Example 1 were repeated except that 17.8 NmL of hydrogen was used, the autoclave internal pressure was brought to 0.55 MPaG by nitrogen pressurization, and then propylene was charged to give a total pressure of 0.6 MPaG, and the polymerization time was changed to 25 minutes, thereby affording 88.9 g of the polymer for evaluation.

[Example 3] 1-Butene/Propylene Copolymer

The procedures in Example 1 were repeated except that 35.5 NmL of hydrogen was used, the autoclave internal pressure was brought to 0.68 MPaG by nitrogen pressurization, and then propylene was charged to give a total pressure of 0.7 MPaG, and the polymerization time was changed to 15 minutes, thereby affording 92.4 g of the polymer for evaluation.

[Example 4] 1-Butene/Propylene Copolymer

The procedures in Example 1 were repeated except that 35.5 NmL of hydrogen was used, the autoclave internal pressure was brought to 0.52 MPaG by nitrogen pressurization, and then propylene was charged to give a total pressure of 0.6 MPaG, and the polymerization time was changed to 10 minutes, thereby affording 64.1 g of the polymer for evaluation.

In the below-mentioned DSC measurement, two points, 98.1°C, which is TmII derived from the type II crystal and 121.3°C, which is TmI derived from the type I crystal, were observed even at the second heating before the sample underwent the heat history and then was left to stand for 10 days.

[Example 5] 1-Butene/Propylene Copolymer

A Schlenk flask was thoroughly dried and purged with nitrogen, a magnetic stir bar was added thereto, 5.0 pmol of the catalyst (a) as a metallocene compound was added, a 300 eq suspension of modified methyl aluminoxane (1.50 mmol in terms of aluminum atoms, an n-hexane solvent) with respect to the catalyst (a) was added with stirring at room temperature, and then heptane was added in such an amount as to make the catalyst (a) contained at 1 μmol/mL, to give a catalyst liquid.

In a 1500 ml-volume SUS autoclave that had been thoroughly dried and purged with nitrogen, 500 mL of heptane as a polymerization solvent and 1.5 mL of hexane solution (Al = 0.5 M, 0.75 mmol) of triisobutylaluminum were loaded. Then, to the resultant mixture, 180 g of 1-butene was added with stirring at 850 RPM, followed by heating to a polymerization temperature of 40°C. At this temperature, nitrogen was added until the autoclave internal pressure became 0.68 MPaG, and the autoclave was further pressurized under propylene until the total pressure became 0.7 MPaG.

The autoclave was fed with the catalyst liquid prepared above, thereby allowing polymerization to be initiated, propylene was supplied such that the total pressure of 0.7 MPaG was maintained until the termination of polymerization, and 10 minutes after the initiation of polymerization, methanol was added to terminate the polymerization.

The autoclave was cooled and depressurized, and the resultant polymerization liquid was taken out of the autoclave and charged into methanol to precipitate a polymer, which was recovered by filtration. The polymer obtained was dried under reduced pressure at 80°C for 10 hours, thereby affording 39.6 g of the polymer for evaluation.

[Example 6] Butene Copolymer Blend

The procedures in Example 1 were repeated except that 8.9 NmL of hydrogen was used, the autoclave internal pressure was brought to 0.58 MPaG by nitrogen pressurization, and then propylene was charged to give a total pressure of 0.6 MPaG, and the polymerization time was changed to 27 minutes, thereby affording a polymer (1); the procedures in Example 1 were repeated except that 284.0 NmL of hydrogen was used, the autoclave internal pressure was brought to 0.58 MPaG by nitrogen pressurization, and then propylene was charged to give a total pressure of 0.6 MPaG, and the polymerization time was changed to 10 minutes, thereby affording a polymer (2); and 80 wt% of the polymer (1) and 20 wt% of the polymer (2) were mixed, thereby affording the polymer for evaluation

In this regard, the analysis results from the polymer (1) and the polymer (2) showed a 95.7 mol% 1-butene unit, a 4.3 mol% propylene unit, and a [η] value of 2.8 dl/g for the polymer (1), and a 96.5 mol% 1-butene unit, a 3.5 mol% propylene unit, and a [η] value of 0.81 dl/g for the polymer (2) .

[Example 7] Butene Copolymer Blend

The procedures in Example 6 were repeated except that 60 wt% of the polymer (1) and 40 wt% of the polymer (2) were used, thereby affording the polymer for evaluation.

[Example 8] 1-Butene/Propylene Copolymer

The procedures in Example 1 were repeated except that the catalyst (b) was used, 230.8 NmL of hydrogen was used, the autoclave internal pressure was brought to 0.58 MPaG by nitrogen pressurization, and then propylene

was charged to give a total pressure of 0.6 MPaG, and the polymerization time was changed to 10 minutes, thereby affording 97.1 g of the polymer for evaluation.

[Example 9] 1-Butene/Propylene Copolymer

The procedures in Example 1 were repeated except that the catalyst (b) was used, 35.5 NmL of hydrogen was used, the autoclave internal pressure was brought to 0.57 MPaG by nitrogen pressurization, and then propylene was charged to give a total pressure of 0.6 MPaG, and the polymerization time was changed to 5 minutes, thereby affording 60.5 g of the polymer for evaluation.

[Example 10] Butene Copolymer Blend (having a nucleating agent added thereto)

The procedures in Example 1 were repeated except that the catalyst (b) was used, 17.8 NmL of hydrogen was used, the autoclave internal pressure was brought to 0.57 MPaG by nitrogen pressurization, and then propylene was charged to give a total pressure of 0.6 MPaG, and the polymerization time was changed to 9 minutes, thereby affording a polymer (3); the procedures in Example 8 were repeated, thereby affording a polymer (4); and 0.07 wt% of EBSA (ethylenebisstearic acid amide, made by Kyoeisha Chemical Co., Ltd.) was added as a nucleating agent to 70 wt% of the polymer (3) and 30 wt% of the polymer (4), thereby affording the polymer for evaluation.

In this regard, the analysis results from the polymer (3) and the polymer (4) showed a 96.5 mol% 1-butene unit, a 3.5 mol% propylene unit, and a [η] value of 3.0 dl/g for the polymer (3), and a 95.7 mol% 1-butene unit, a 4.3 mol% propylene unit, and a [η] value of 0.98 dl/g for the polymer (4) because the polymer (4) was obtained in the same manner as in Example 8.

[Example 11] 1-Butene/Ethylene Copolymer

The procedures in Example 1 were repeated except that 71.0 NmL of hydrogen was used, the autoclave internal pressure was brought to 0.69 MPaG by nitrogen pressurization, and then ethylene was charged to give a total pressure of 0.7 MPaG, and the polymerization time was changed to 10 minutes, thereby affording 96.8 g of the polymer for evaluation.

[Example 12] Butene Copolymer Blend (containing a low molecular weight homopolymer)

The procedures in Example 1 were repeated except that 8.9 NmL of hydrogen was used, the autoclave internal pressure was brought to 0.57 MPaG by nitrogen pressurization, and then propylene was charged to give a total pressure of 0.6 MPaG, and the polymerization time was changed to 27 minutes, thereby affording a polymer (5); the procedures in Example 1 were repeated except that 284.0 NmL of hydrogen was used, the autoclave internal pressure was brought to 0.5 MPaG by nitrogen pressurization, and the polymerization time was changed to 20 minutes, thereby affording a polymer (6); and 75 wt% of the polymer (5) and 25 wt% of the polymer (6) were mixed, thereby affording the polymer for evaluation.

In this regard, the analysis results from the polymer (5) and the polymer (6) showed a 94.8 mol% 1-butene unit, a 5.2 mol% propylene unit, and a [η] value of 2.9 dl/g for the polymer (5), and a [η] value of 0.87 dl/g for the polymer (6) as a 1-butene homopolymer.

[Example 13] Butene Copolymer Blend (containing a high molecular weight homopolymer)

The procedures in Example 1 were repeated except that 17.8 NmL of hydrogen was used, the autoclave internal pressure was brought to 0.5 MPaG by nitrogen pressurization, and the polymerization time was changed to 30 minutes, thereby affording a polymer (7); the procedures in Example 1 were repeated except that 213.0 NmL of hydrogen was used, the autoclave internal pressure was brought to 0.56 MPaG by nitrogen pressurization, and then propylene was charged to give a total pressure of 0.6 MPaG, and the polymerization time was changed to 10 minutes, thereby affording a polymer (8); and 75 wt% of the polymer (7) and 25 wt% of the polymer (8) were mixed, thereby affording the polymer for evaluation.

In this regard, the analysis results from the polymer (7) and the polymer (8) showed a [η] value of 2.7 dl/g for the polymer (7) as a 1-butene homopolymer, and a 94.8 mol% 1-butene unit, a 5.2 mol% propylene unit, and a [η] value of 0.9 dl/g for the polymer (8).

[Example 14] 1-Butene/Propylene Copolymer

The procedures in Example 1 were repeated except that 71.0 NmL of hydrogen was used, the autoclave internal pressure was brought to 0.66 MPaG by nitrogen pressurization, and then propylene was charged to give a total pressure of 0.7 MPaG, and the polymerization time was changed to 15 minutes, thereby affording 138.0 g of the polymer for evaluation.

[Example 15] 1-Butene/Propylene Copolymer

A Schlenk flask was thoroughly dried and purged with nitrogen, a magnetic stir bar was added thereto, 5.0 μmol of the catalyst (c) as a metallocene compound was added, and then toluene in such an amount as to make the catalyst (c) contained at 1 μmol/mL in the resultant preparation, 10 eq of triisobutylaluminum (50 μmol in terms of aluminum atoms, an n-hexane solvent) with respect to the catalyst (c), and 10 eq of triphenylcarbeniumtetrakis(pentafluorophenyl)borate (50 μmol in terms of boron atoms, a toluene solvent) with respect to the catalyst (c) were added with stirring at room temperature, to give a catalyst liquid.

In a 1500 ml-volume SUS autoclave that had been thoroughly dried and purged with nitrogen, 500 mL of heptane as a polymerization solvent and 1.5 mL of hexane solution (Al = 0.5 M, 0.75 mmol) of triisobutylaluminum were loaded. Then, to the resultant mixture, 180 g of 1-butene was added with stirring at 850 RPM, followed by heating to a polymerization temperature of 60°C. Nitrogen was added until the autoclave internal pressure became 0.58 MPaG, and the autoclave was further pressurized under propylene until the total pressure became 0.6 MPaG.

The autoclave was fed with the catalyst liquid prepared above, thereby allowing polymerization to be initiated, propylene was supplied such that the total pressure of 0.6 MPaG was maintained until the termination of polymerization, and 10 minutes after the initiation of polymerization, methanol was added to terminate the polymerization.

The autoclave was cooled and depressurized, and the resultant polymerization liquid was taken out of the autoclave and charged into methanol to precipitate a polymer, which was recovered by filtration. The polymer obtained was dried under reduced pressure at 80°C for 12 hours, thereby affording 77.9 g of the polymer for evaluation.

[Example 16] 1-Butene/Propylene Copolymer

A Schlenk flask was thoroughly dried and purged with nitrogen, a magnetic stir bar was added thereto, 5.0 μmol of the catalyst (d) as a metallocene compound was added, and then toluene in such an amount as to make the catalyst (d) contained at 1 μmol/mL in the resultant preparation, 10 eq of triisobutylaluminum (50 μmol in terms of aluminum atoms, an n-hexane solvent) with respect to the catalyst (d), and 10 eq of triphenylcarbeniumtetrakis(pentafluorophenyl)borate (50 μmol in terms of boron atoms, a toluene solvent) with respect to the catalyst (d) were added with stirring at room temperature, to give a catalyst liquid.

In a 1500 ml-volume SUS autoclave that had been thoroughly dried and purged with nitrogen, 500 mL of heptane as a polymerization solvent and 1.5 mL of hexane solution (Al = 0.5 M, 0.75 mmol) of triisobutylaluminum were loaded. Then, to the resultant mixture, 180 g of 1-butene was added with stirring at 850 RPM, followed by heating to a polymerization temperature of 60°C. Nitrogen was added until the autoclave internal pressure became 0.56 MPaG, and the autoclave was further pressurized under propylene until the total pressure became 0.6 MPaG.

The autoclave was fed with the catalyst liquid prepared above, thereby allowing polymerization to be initiated, propylene was supplied such that the total pressure of 0.6 MPaG was maintained until the termination of polymerization, and 10 minutes after the initiation of polymerization, methanol was added to terminate the polymerization.

The autoclave was cooled and depressurized, and the resultant polymerization liquid was taken out of the autoclave and charged into methanol to precipitate a polymer, which was recovered by filtration. The polymer obtained was dried under reduced pressure at 80°C for 12 hours, thereby affording 91.5 g of the polymer for evaluation.

[Example 17] Resin Composition Including Butene Polymer

An 80 wt% of the 1-butene/propylene copolymer polymerized in the below-mentioned Comparative Example 2 and 20 wt% of the 1-butene/propylene copolymer obtained in Example 14 were mixed, thereby affording the polymer for evaluation (resin composition).

[Example 18] Resin Composition Including Butene Polymer

A 70 wt% of the polymer for evaluation obtained in the below-mentioned Comparative Example 1-2 and 30 wt% of the 1-butene/propylene copolymer obtained in Example 1 were mixed, thereby affording the polymer for evaluation (resin composition).

[Example 19] Resin Composition Including Butene Polymer

A 70 wt% of the polymer for evaluation obtained in the below-mentioned Comparative Example 1-2 and 30 wt% of the 1-butene/propylene copolymer obtained in Example 2 were mixed, thereby affording the polymer for evaluation (resin composition).

[Comparative Example 1] 1-Butene Homopolymer

In Comparative Example 1, a conventional known polymerization method for a butene polymer using the Ti-based catalyst described in [Production Example 1] of JP-A-2002-241553 was repeated except that propylene was not used and the total pressure was changed to 0.5 MPaG, thereby synthesizing a 1-butene homopolymer as the polymer for evaluation.

[Comparative Example 1-2] 1-Butene Homopolymer (having a nucleating agent added thereto)

To the 1-butene homopolymer obtained in Comparative Example 1, 0.07 wt% of EBSA (ethylenebisstearic acid amide, made by Kyoeisha Chemical Co., Ltd.) was added as a nucleating agent, thereby affording the polymer for evaluation.

[Comparative Example 2] 1-Butene/Propylene Copolymer

In Comparative Example 2, a conventional known polymerization method for a butene polymer using the Ti-based catalyst described in [Production Example 1] of JP-A-2002-241553 was repeated except that the total pressure was changed to 0.5 MPaG, thereby synthesizing a 1-butene/propylene binary copolymer as the polymer for evaluation.

[Comparative Example 3] 1-Butene Homopolymer

A Schlenk flask was thoroughly dried and purged with nitrogen, a magnetic stir bar was added thereto, 2.0 μmol of the catalyst (a) as a metallocene compound was added, a 300 eq suspension of modified methyl aluminoxane (0.60 mmol in terms of aluminum atoms, an n-hexane solvent) with respect to the catalyst (a) was added with stirring at room temperature, and then heptane was added in such an amount as to make the catalyst (a) contained at 1 μmol/mL, to give a catalyst liquid.

In a 1500 ml-volume SUS autoclave that had been thoroughly dried and purged with nitrogen, 500 mL of heptane as a polymerization solvent and 1.5 mL of hexane solution (Al = 0.5 M, 0.75 mmol) of triisobutylaluminum were loaded. Then, to the resultant mixture, 180 g of 1-butene was added with stirring at 850 RPM, followed by heating to a polymerization temperature of 60°C. At this temperature, 71.0 NmL of hydrogen was added, then nitrogen was added until the autoclave internal pressure became 0.7 MPaG.

This autoclave was fed with the catalyst liquid prepared above, thereby allowing polymerization to be initiated, and 15 minutes after the polymerization initiation, methanol was added to terminate the polymerization.

The autoclave was cooled and depressurized, and the resultant polymerization liquid was taken out of the autoclave and charged into methanol to precipitate a polymer, which was recovered by filtration. The polymer obtained was dried under reduced pressure at 80°C for 10 hours, thereby affording 122.9 g of the polymer for evaluation.

[Comparative Example 4] 1-Butene Homopolymer

A Schlenk flask was thoroughly dried and purged with nitrogen, a magnetic stir bar was added thereto, 5.0 μmol of the catalyst (c) as a metallocene compound was added, and then toluene in such an amount as to make the catalyst (c) contained at 1 μmol/mL in the resultant preparation, 10 eq of triisobutylaluminum (50 μmol in terms of aluminum atoms, an n-hexane solvent) with respect to the catalyst (c), and 10 eq of triphenylcarbeniumtetrakis(pentafluorophenyl)borate (50 μmol in terms of boron atoms, a toluene solvent) with respect to the catalyst (c) were added with stirring at room temperature, to give a catalyst liquid.

In a 1500 ml-volume SUS autoclave that had been thoroughly dried and purged with nitrogen, 500 mL of heptane as a polymerization solvent and 1.5 mL of hexane solution (Al = 0.5 M, 0.75 mmol) of triisobutylaluminum were loaded. Then, to the resultant mixture, 180 g of 1-butene was added with stirring at 850 RPM, followed by heating to a polymerization temperature of 60°C. Further, at this temperature, the autoclave was pressurized under nitrogen until the internal pressure became 0.5 MPaG.

This autoclave was fed with the catalyst liquid prepared above, thereby allowing polymerization to be initiated, and 20 minutes after the polymerization initiation, methanol was added to terminate the polymerization.

The autoclave was cooled and depressurized, and the resultant polymerization liquid was taken out of the autoclave and charged into methanol to precipitate a polymer, which was recovered by filtration. The polymer obtained was dried under reduced pressure at 80°C for 12 hours, thereby affording 102.1 g of the polymer for evaluation.

[Comparative Example 5] 1-Butene Homopolymer

PB4269 made by LyondellBasell NV was used.

[Methods of Producing Various Measurement Samples of Polymers]

With respect to 100 parts by mass of the polymers for evaluation obtained in Examples and Comparative Examples, 0.2 parts by mass of tri(2,4-di-t-butylphenyl) phosphate as a secondary antioxidant and 0.2 parts by mass of octadecyl 3-(3,5-di-t-butyl-4-hydroxyphenyl) propionate as a heat-resistant stabilizer were blended. Then, the resultant mixture was melt-kneaded using a Labo Plastomill (a biaxial batch type melt-kneading device) made by Toyo Seiki Seisaku-sho, Ltd. under the conditions including a set temperature of 200°C, a feed amount of 40 g (device batch volume = 60 $cm^3$), 60 rpm, and 5 minutes, and then the resultant kneaded product was taken out.

[Methods of Producing Various Measurement Press Sheets of Polymers]

The samples obtained in [Methods of Producing Various Measurement Samples of Polymers] were pressed at 10 MPa for 1 to 2 minutes using a hydraulic thermal press made by Shinto Metal Industries Corporation with the press set at 200°C and the remaining heat used for about 3 to 5 minutes, and then compressed (cooled) at 10 MPa for about 5 minutes using another hydraulic thermal press made by Shinto Metal Industries Corporation with the press set at 20°C, thereby producing press sheets (measurement samples) having a thickness of 0.5 mm, 2 mm, or 6 mm. A 5 mm thick brass plate was used as a hot plate. The measurement samples made using the above-mentioned method were used as samples for various measurements such as DSC, tensile testing, FNFT, and X-ray analysis.

[Measurement conditions of different properties]

In Examples and Comparative Examples, the different properties of the samples were measured by the below-mentioned methods.
The results are shown in Table 1 to Table 4.

[Comonomer Composition]

The amount of a structural unit (comonomer unit) derived from at least one olefin selected from ethylene and α-olefins having 3 to 20 carbon atoms (excluding 1-butene) contained in the butene polymer was calculated from a $^{13}C$-NMR spectrum obtained using the following device and conditions.
A nuclear magnetic resonance device, Model AVANCE III cryo-500, made by Bruker Biospin K.K. was used to make measurements, for which the solvent was a solvent mixture of o-dichlorobenzene/benzene-$d_6$ (4/1 v/v), the sample concentration was 60 mg/0.6 mL, the measurement temperature was 120°C, the nucleus to be observed was $^{13}C$ (125 MHz), the sequence was for single pulse proton broadband decoupling, the pulse width was 5.0 μseconds (45° pulse), the repetition time was 5.5 seconds, the number of scans was 128, and the reference value for chemical shift was a butene side chain methylene signal of 27.5 ppm. Using the value of integral of the main chain methylene signal, the comonomer unit content was calculated in accordance with the below-mentioned equation.

$$\text{comonomer unit content (mol\%)} = [P/(P + M)] \times 100$$

Here, P represents the total peak area of the comonomer main chain methylene signal, and M represents the total peak area of the 1-butene main chain methylene signal.

[mmmm Fraction]

An mmmm fraction (%) is represented by the below-mentioned equation.

$$\text{mmmm fraction (\%)} = \text{Smmmm/S} \times 100$$

Here, in a $^{13}$C-NMR spectrum, Smmmm represents the peak area of the butene side chain methylene signal derived from an mmmm the peak top of which appears at 27.50 ppm, and S represents the area of all peaks of the butene side chain methylene signal which appear in the range of 29.0 ppm to 25.0 ppm.

[rr fraction]

An rr fraction (%) is represented by the below-mentioned equation.

$$\text{rr fraction (\%)} = Srr/S \times 100$$

Here, in a $^{13}$C-NMR spectrum, S rr represents the area of peaks of the butene side chain methylene signal derived from an rr which appear in the range of 26.6 ppm to 25.0 ppm, and S represents the area of all peaks of the butene side chain methylene signal which appear in the range of 29.0 ppm to 25.0 ppm.

[Intrinsic Viscosity [η]]

The intrinsic viscosity [η] of the butene polymer was measured at 135°C using a decalin solvent. Specifically, about 20 mg of the butene polymer obtained by the polymerization was dissolved in 15 ml of decalin, and measured for specific viscosity ηsp in an oil bath at 135°C. To this decalin solution, 5 ml of decalin solvent was added to dilute the solution, and the resulting solution was measured for specific viscosity ηsp in the same manner. This dilution operation was further repeated twice, and the ηsp/C value obtained by extrapolation of the concentration (C) to 0 was determined to be an intrinsic viscosity (see the following equation).

$$[\eta] = \lim(\eta sp/C)\ (c \to 0)$$

[Molecular Weight (Mn, Mw), Molecular Weight Distribution (Mw/Mn), and Ratio of 10000 or Less Molecular Weights]

The molecular weight and molecular weight distribution of the butene polymer were measured using a liquid chromatograph (Alliance/GPC2000 made by Waters Corporation) to which a column composed of TSKgelGMH$^6$-HT × 2 and TSKgelGMH$^6$-HTL × 2 (each having a column size of 7.5 mm in diameter and 300 mm in length) made by Tosoh Corporation was serially-connected. o-Dichlorobenzene was used as a mobile phase medium, 0.025 mass% of BHT (Takeda Pharmaceutical Company Ltd.) was used as an antioxidant, and measurements were made at a sample concentration of 0.15% (V/W), a flow rate of 1.0 ml/min, and 140°C. Standard polystyrenes made by Tosoh Corporation were used for a molecular weight of 500 to 20,600,000. The resultant chromatogram was analyzed by a known method using a data processing software item, Empower 2, made by Waters Corporation from a calibration curve based on a standard polystyrene sample, and the Mn, Mw, and Mw/Mn and a ratio of components having a molecular weight of 10000 or less were calculated.

[Ratio of Eluted Material at 0°C or Less; Temperature Rising Elution Fractionation (TREF)]

A ratio of an eluted material at 0°C or less was measured using a high-throughput composition distribution analysis device made by Polymer Characterization, S.A. Specifically, a polymer to be measured was dissolved in orthodichlorobenzene to prepare a 0.2% (weight/volume) solution. The polymer solution prepared by filtering insoluble components off was injected into the column and the column temperature was slowly lowered from 95°C to -20°C at a speed of 0.5°C/h. Then, orthodichlorobenzene was sent into the column at a flow rate of 0.5 ml/min, during which the column temperature was raised from -20°C to 140°C at a speed of 1°C/h. Polymer components eluted in this heating process were continuously measured using an infrared detector (IR5). The resultant chromatogram was analyzed, and the concentrations of the eluted polymers at different temperature were calculated.

[Melting Point Tm, Melting Calorie ΔH, 95% Crystal Transformation Completion Time]

An exothermic/endothermic curve was determined using a DSC measure device (DSC220C) made by Seiko Instruments Inc., and the temperature at the maximum melting peak position during heating was regarded as a melting point Tm. In addition, a melting calorie, ΔH, was calculated from the integrated value of this crystal melt peak.

Measurements were made in the following manner. From a 0.5 mm thick press sheet, about 5 mg of a sample was cut out, filled into a measurement aluminium pan, heated from 30°C to 200°C at a heating speed of 10°C/min, held

at 200°C for 5 minutes, then cooled to 30°C at a cooling speed of 10°C/min, held at 30°C for 5 minutes, then heated again from 30°C to 200°C at a heating speed of 10°C/min, held at 200°C for 5 minutes, and then cooled again to 30°C at a cooling speed of 10°C/min. The melting peak exhibited in the second heating was regarded as the melting point, TmII, derived from the type II crystal.

A sample that underwent the heat history was left to stand at room temperature for 10 days and heated again using DSC from 30°C to 200°C at a heating speed of 10°C/min, the melting peak that was then exhibited was regarded as the melting point, TmI, derived from the type I crystal, and the melting calorie based on this melting peak was regarded as $\Delta H$. In a case where a plurality of peaks were observed in the measurement, the peak at lower temperature was assigned to a peak derived from type II crystal, the peak at higher temperature was assigned to a peak derived from the type I crystal.

The 95% crystal transformation completion time was determined as follows: The samples that underwent the heat history were left to stand at room temperature for 8 hours, about 1 day, 3 days, 5 days, 7 days, and 10 days respectively and each heated using DSC from 30°C to 200°C at a heating speed of 10°C/min, and the melting peaks that were then exhibited were observed. The melting calories derived from the type I crystal and the type II crystal respectively were calculated by dividing the peak area derived from the type I crystal and the type II crystal by the peak height ratios of the peaks derived from the type I crystal and the type II crystal respectively. The melting calorie derived from the type I crystal was graphed with respect to the elapsed time (a graph plotting straight lines between data), and the time taken until the 95% $\Delta H$ value of the melting calorie $\Delta H$ value obtained the 10 days later, when the crystal transformation was considered to be completed, was reached was regarded as a crystal transformation completion time.

[Yield Point Stress (YS), Young's Modulus (YM)]

A 2 mm thick press sheet was left to stand for 10 days or more, and then made into a dumbbell specimen having a No. 2 1/2 size in accordance with JIS K7113, subjected to a tensile test using a tensile testing machine with a thermostatic oven, made by Intesco Co., Ltd., under the conditions including a tension rate of 30 mm/min and measurement temperatures of 23°C and 95°C, and thus measured for yield point stress (YS) and Young's modulus (YM).

[Crystal Lamellar Thickness]

The crystal lamellar thickness was calculated using a combination of Wide Angle X-ray Diffraction (hereinafter also referred to as "WAXD") and Small Angle X-ray Scattering (hereinafter also referred to as "SAXS").

WAXD measurements can be carried out using a general wide angle X-ray diffraction measurement device, and such measurements can be made using, for example, the SmartLab or NANO-Viewer made by Rigaku Corporation. In addition, such measurements can also be made using a radiation facility such as BL03XU, a beamline dedicated to polymers, which is installed at the large radiation facility, SPring-8, (in Hyogo Prefecture). SAXS measurements can be carried out using a general small angle X-ray scattering measurement device, and such measurements can be made using, for example, a NANO-Viewer made by Rigaku Corporation. In addition, such measurements can also be made using a radiation facility such as BL03XU, a beamline dedicated to polymers, which is installed at the large radiation facility, SPring-8, (in Hyogo Prefecture).

Measurement devices and measurement conditions for WAXD and SAXS measurements are as follows.

(Crystallinity)

To determine a crystallinity at room temperature, a WAXD measurement was made by a transmission method using a NANO-Viewer made by Rigaku Corporation. Measurement conditions are as follows.

- incident X-ray: CuK $\alpha$-ray
- detector: photon counting two-dimensional X-ray detector, PILATUS
- distance between sample and detector: 81.4 mm
- sample thickness: 2 mm
- measurement temperature: room temperature

A scattering intensity I obtained by WAXD measurement was plotted with respect to a scattering vector size q defined in accordance with the equation (1) ($2\theta$ is a scattering angle, and $\lambda$ is an incident X-ray wavelength) to obtain a scattering intensity curve I(q) [the ordinate is I(q), and the abscissa is q; q is in the range of 5 $nm^{-1}$ to 25 $nm^{-1}$], the curve was separated into peaks using a known analysis program, a scattering intensity $S_c$ derived from the crystal phase and a scattering intensity $S_a$ derived from the amorphous phase were determined, and a crystallinity $\varphi_c$ was calculated in accordance with the equation (2).

[Math. 1]

$$q = \frac{4\pi}{\lambda} sin\left(\frac{2\theta}{2}\right) \qquad (1)$$

$$\phi_c = 100 \times S_c / (S_c + S_a) \qquad (2)$$

(Lamellar Long Period)

To determine the long period at room temperature, a SAXS measurement was made by a transmission method using a NANO-Viewer made by Rigaku Corporation. Measurement conditions are as follows.

- incident X-ray: CuK $\alpha$-ray
- detector: photon counting two-dimensional X-ray detector, PILATUS
- distance between sample and detector: 1340 mm
- sample thickness: 2 mm
- measurement temperature: room temperature

A scattering intensity I obtained by SAXS measurement was plotted with respect to a scattering vector size q defined in accordance with the equation (1) to obtain a scattering intensity curve I(q) [the ordinate is I(q), and the abscissa is q], which was multiplied by $q^2$ to obtain a Lorentz correction scattering curve [the ordinate is $q^2 \times I(q)$, and the abscissa is q], and the long period L was determined in accordance with the equation (3) on the basis of the peak position $q_m$ on the Lorentz correction scattering curve.

$$L = 2\pi / q_m \qquad (3)$$

(Crystal Lamellar Thickness)

The crystal lamellar thickness Lc was calculated from the long period L and the crystallinity $\varphi_c$ in accordance with the following equation.

$$Lc = L \times \varphi_c$$

[Full-notch Tensile Fatigue Test (FNFT)]

Using a Servopulser made by Shimadzu Corporation, full notch tensile fatigue tests (FNFT) were carried out to 5 mm $\times$ 5 mm $\times$ 60 mm rectangular columns cut out of 6 mm thick press sheets from Examples 6, 7, 10, 12, and 13 and Comparative Examples 1, 1-2, 2, and 5 under the test conditions including a 0.85 mm notch depth, a 20 mm distance between chucks, a rectangular test wave form, a 0.5 Hz frequency, and a 95°C test temperature. The actual stresses (MPa) at 10,000 or 100,000 cycles to failure are shown in Table 1 to Table 4.

[Comparison between Examples and Comparative Examples]

Fig. 1 shows the comonomer total amount vs. the 95% crystal transformation completion time. It is understood that the larger the comonomer total amount (K) is, the shorter the 95% crystal transformation completion time tends to be, and the 95% crystal transformation completion time is shorter in the Examples than in the Comparative Examples.

Fig. 2 shows the comonomer total amount vs. YM (23°C), and Fig. 3 shows the comonomer total amount vs. YS (23°C). Although the butene polymers in Examples contain a comonomer unit, YM (23°C) and YS (23°C) are less likely to decrease.

Comparative Examples 1, 1-2, and 2 are examples of the butene polymers for which a Ti-based catalyst was used. The 95% crystal transformation completion time of the 1-butene homopolymer of Comparative Example 1 is 117 hours, which is very long. Relative to this, the 95% crystal transformation completion time of the 1-butene/propylene copolymer of Comparative Example 2 was improved to 49 hours, but is not satisfactorily short, and, in addition, Comparative Example 2 suffered a reduction in mechanical properties such as YM (23°C), YS (23°C), and FNFT and did not

have strength sufficient to be used for molded articles such as pipes and pipe joints. Comparative Example 1-2 is an example in which a nucleating agent was added to Comparative Example 1, and the 95% crystal transformation completion time was improved to 47 hours but not satisfactorily short.

Examples 17 to 19 are examples of resin compositions composed of a butene polymer for which a Ti-based catalyst was used and the butene polymer according to the present invention. It is understood that, compared to Comparative Examples, the crystal transformation completion times are shorter and, in addition, the YMs (23°C) and YSs (23°C) are enhanced. In other words, the butene polymer according to the present invention is also useful as a resin composition.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Comonomer | - | Propylene | Propylene | Propylene | Propylene | Propylene | Propylene | Propylene | Propylene | Propylene | Propylene |
| Butene Component | mol% | 92.2 | 92.2 | 94.5 | 88.4 | 97.6 | 95.9 | 96.0 | 95.7 | 96.5 | 96.3 |
| Comonomer Total Amount (K) | mol% | 7.8 | 7.8 | 5.5 | 11.6 | 2.4 | 4.1 | 4.0 | 4.3 | 3.5 | 3.7 |
| mmmm | % | 96.9 | 97.0 | 95.6 | 97.7 | 96.6 | 96.5 | 96.6 | 96.8 | 96.8 | 96.6 |
| rr Fraction | % | 0.4 | 0.2 | 0.9 | 0.2 | 0.3 | 0.4 | 0.4 | 0.3 | 0.3 | 0.4 |
| [η] | dl/g | 0.91 | 2.6 | 2.2 | 2.2 | 5.3 | 2.4 | 2.0 | 0.98 | 2.9 | 2.4 |
| Ratio of Component Having Molecular Weight of 10000 or less | % | 0.6 | 0.2 | 0.0 | 0.0 | 0.0 | 0.1 | 0.4 | 0.9 | 0.0 | 0.2 |
| Mw | - | 152,000 | 672,000 | 538,000 | 518,000 | 1,600,000 | 652,000 | 528,000 | 170,000 | 698,000 | 624,000 |
| Mn | - | 78,600 | 269,000 | 249,000 | 238,000 | 654,000 | 183,000 | 125,000 | 78,500 | 305,000 | 178,000 |
| Mw/Mn | - | 1.9 | 2.5 | 2.2 | 2.2 | 2.4 | 3.6 | 4.2 | 2.2 | 2.3 | 3.5 |
| Amount of Eluted Material at 0°C or less | wt% | - | - | - | 0.2 | - | - | - | - | 0.1 | - |
| 95% Crystal Transformation Completion Time | h | 24 | 24 | 21 | 8 | 41 | 23 | 23 | 24 | 43 | 40 |
| Tml (10 days later) | °C | 124.6 | 125.1 | 124.6 | 124.2 | 131.2 | 128.9 | 128.6 | 127.1 | 129.4 | 128.3 |
| ΔH | J/g | 86.1 | 72.5 | 76.5 | 74.6 | 73.7 | 78.3 | 80.3 | 83.4 | 73.3 | 79.5 |
| YS (23°C) | MPa | 22.6 | 17.6 | 18.0 | 16.5 | 17.2 | 18.2 | 19.3 | 20.4 | 17.5 | 19.2 |
| YM (23°C) | MPa | 400 | 330 | 400 | 310 | 370 | 360 | 370 | 370 | 360 | 410 |
| YS (95°C) | MPa | 1.3 | 5.9 | 7.0 | 4.5 | 7.1 | 6.8 | 7.1 | 5.8 | 6.0 | 7.3 |
| YM (95°C) | MPa | 90 | 100 | 140 | 70 | 140 | 120 | 130 | 130 | 110 | 140 |

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Crystal Lamellar Thickness | nm | 9.6 | 10.5 | 11.4 | 8.9 | 12.1 | 10.4 | 9.5 | - | - | - |
| FNFT (95°C, 0.5 Hz) Stress at 10^4 Cycles to Failure | MPa | - | - | - | - | - | 7.5 | 6.9 | - | - | 8.6 |
| FNFT (95°C, 0.5 Hz) Stress at 10^5 Cycles to Failure | MPa | - | - | - | - | - | 6.4 | 6.0 | - | - | 7.7 |

"-" in the Table means no data.

[Table 2]

| | | Example 11 | Example 12 | Example 13 | Example 14 | Example 15 | Example 16 |
|---|---|---|---|---|---|---|---|
| Comonomer | - | ethylene | Propylene | Propylene | Propylene | Propylene | Propylene |
| Butene Component | mol% | 99.1 | 96.1 | 98.7 | 93.4 | 97.5 | 95.2 |
| Comonomer Total Amount (K) | mol% | 0.9 | 3.9 | 1.3 | 6.6 | 2.5 | 4.8 |
| mmmm | % | 96.6 | 97.1 | 97.4 | 96.6 | 97.3 | 98.1 |
| rr Fraction | % | 0.4 | 0.2 | 0.2 | 0.2 | 0.0 | 0.0 |
| [η] | dl/g | 1.8 | 2.4 | 2.4 | 1.5 | 2.2 | 2.3 |
| Ratio of Component Having Molecular Weight of 10000 or less | % | 0.3 | 0.6 | 0.2 | 0.0 | 0.0 | 0.1 |
| Mw | - | 391,000 | 612,000 | 601,000 | 302,000 | 533,000 | 530,000 |
| Mn | - | 168,000 | 142,000 | 143,000 | 137,000 | 249,000 | 245,000 |
| Mw/Mn | - | 2.3 | 4.3 | 4.2 | 2.2 | 2.1 | 2.2 |
| Amount of Eluted Material at 0°C or less | wt% | 0.1 | - | - | - | 0.2 | 0.1 |
| 95% Crystal Transformation Completion Time | h | 41 | 31 | 44 | 23 | 44 | 38 |
| Tml (10 days later) | °C | 125.9 | 131.2 | 131.2 | 128.5 | 128.7 | 126.6 |
| ΔH | J/g | 68.2 | 83.5 | 77.6 | 80.1 | 73.7 | 72.9 |
| YS (23°C) | MPa | 17.4 | 19.6 | 18.5 | 18.0 | 18.0 | 17.8 |
| YM (23°C) | MPa | 330 | 420 | 400 | 380 | 370 | 340 |
| YS (95°C) | MPa | 6.2 | 7.6 | 7.3 | 6.5 | 6.5 | 6.5 |
| YM (95°C) | MPa | 120 | 150 | 140 | 110 | 120 | 120 |
| Crystal Lamellar Thickness | nm | - | - | - | - | - | - |
| FNFT (95°C, 0.5 Hz) Stress at 10^4 Cycles to Failure | MPa | - | 8.0 | 7.9 | - | - | - |
| FNFT (95°C, 0.5 Hz) Stress at 10^5 Cycles to Failure | MPa | - | 7.2 | 6.8 | - | - | - |
| "-" in the Table means no data. | | | | | | | |

[Table 3] (Examples of Resin Compositions)

| | | Example 17 | Example 18 | Example 19 |
|---|---|---|---|---|
| Comonomer | - | Propylene | Propylene | Propylene |
| Butene Component | mol% | 95.6 | 97.7 | 97.7 |
| Comonomer Total Amount (K) | mol% | 4.4 | 2.3 | 2.3 |
| mmmm | % | 93.0 | 93.7 | 93.7 |

(continued)

| | | Example 17 | Example 18 | Example 19 |
|---|---|---|---|---|
| rr Fraction | % | - | - | - |
| [η] | dl/g | 2.2 | 2.0 | 2.5 |
| Ratio of Component Having Molecular Weight of 10000 or less | % | - | - | - |
| Mw | - | - | - | - |
| Mn | - | - | - | - |
| Mw/Mn | - | - | - | - |
| Amount of Eluted Material at 0°C or less | wt% | - | - | - |
| 95% Crystal Transformation Completion Time | h | 42 | 44 | 41 |
| Tml (10 days later) | °C | 125.1 | 129.9 | 129.5 |
| ΔH | J/g | 71.3 | 81.9 | 78.6 |
| YS (23°C) | MPa | 16.6 | 20.6 | 18.4 |
| YM (23°C) | MPa | 290 | 380 | 350 |
| YS (95°C) | MPa | 5.6 | 8.9 | 7.6 |
| YM (95°C) | MPa | 85 | 150 | 130 |
| Crystal Lamellar Thickness | nm | - | - | - |
| FNFT (95°C, 0.5 Hz) Stress at 10^4 Cycles to Failure | MPa | - | - | - |
| FNFT (95°C, 0.5 Hz) Stress at 10^5 Cycles to Failure | MPa | - | - | - |
| "-" in the Table means no data. | | | | |

[Table 4]

| | | Comparative Example 1 | Comparative Example 1-2 | Comparative Example 2 | Comparative Example 3 | Comparative Example 4 | Comparative Example 5 |
|---|---|---|---|---|---|---|---|
| Comonomer | - | - | - | Propylene | - | - | - |
| Butene Component | mol% | 100 | 100 | 96.1 | 100 | 100 | 100 |
| Comonomer Total Amount (K) | mol% | 0 | 0 | 3.9 | 0 | 0 | 0 |
| mmmm | % | 92.3 | 92.3 | 92.3 | 97.8 | 98.2 | 96.3 |
| rr Fraction | % | 1.9 | 1.9 | 2.1 | 0.1 | <0.1 | 0.5 |
| [η] | dl/g | 2.4 | 2.4 | 2.4 | 2.4 | 2.2 | 2.4 |
| Ratio of Component Having Molecular Weight of 10000 or less | % | 1.3 | 0.0 | 1.6 | 0.0 | 0.0 | 1.1 |
| Mw | - | 752,000 | 744,000 | 713,000 | 605,000 | 526,000 | 748,000 |
| Mn | - | 120,000 | 86,000 | 103,000 | 273,000 | 249,000 | 115,000 |
| Mw/Mn | - | 6.3 | 8.7 | 6.9 | 2.2 | 2.1 | 6.5 |
| Amount of Eluted Material at 0°C or less | wt% | 2.6 | - | 3.4 | 0.1 | - | 1.6 |
| 95% Crystal Transformation Completion Time | h | 117 | 47 | 49 | 47 | 120 | 73 |
| Tml (10 days later) | °C | 128.4 | 131 | 124.6 | 131.4 | 131.0 | 131.2 |
| ΔH | J/g | 71.1 | 78.1 | 68.5 | 73.3 | 76.1 | 78.8 |
| YS (23°C) | MPa | 16.0 | 17.9 | 15.3 | 17.8 | 17.6 | 18.9 |
| YM (23°C) | MPa | 280 | 270 | 250 | 380 | 380 | 380 |
| YS (95°C) | MPa | 5.1 | 8.6 | 4.6 | 7.3 | 6.8 | 7.9 |
| YM (95°C) | MPa | 70 | 150 | 70 | 140 | 120 | 140 |
| Crystal Lamellar Thickness | nm | 8.0 | - | 7.5 | 11.2 | - | 10.6 |
| FNFT (95°C, 0.5 Hz) Stress at 10^4 Cycles to Failure | MPa | 6.5 | 8.5 | 5.8 | - | - | 8.4 |

(continued)

| | | Comparative Example 1 | Comparative Example 1-2 | Comparative Example 2 | Comparative Example 3 | Comparative Example 4 | Comparative Example 5 |
|---|---|---|---|---|---|---|---|
| FNFT (95°C, 0.5 Hz) Stress at 10^5 Cycles to Failure | MPa | 5.8 | 7.3 | 5.4 | - | - | 7.4 |
| "-" in the Table means no data. | | | | | | | |

## Claims

1. A butene polymer comprising:

   a structural unit derived from 1-butene in an amount of 80.0 to 99.9 mol%; and
   a structural unit derived from at least one olefin selected from ethylene and α-olefins having 3 to 20 carbon atoms other than 1-butene in a total amount (K) of 0.1 to 20.0 mol% (provided that the sum of the amount of the structural unit derived from 1-butene and the total amount (K) is 100 mol%), in which the butene polymer satisfies the requirements (i) to (iv):

   (i) a pentad isotacticity (mmmm) is 94.0% to 99.9%, as measured by $^{13}C$-NMR;
   (ii) a syndiotactic triad fraction (rr) is 1.5% or less, as measured by $^{13}C$-NMR;
   (iii) an intrinsic viscosity [η] at 135°C in a decalin solvent is in the range of 0.5 to 5.5 dl/g; and
   (iv) a ratio of a component having a molecular weight of 10000 or less is less than 1.3 mass%, as measured by gel permeation chromatography (GPC).

2. The butene polymer according to claim 1, wherein the amount of the structural unit derived from 1-butene is 90.0 to 99.9 mol%, and the total amount (K) is 0.1 to 10.0 mol%.

3. The butene polymer according to claim 1, wherein the amount of the structural unit derived from 1-butene is 90.0 to 96.2 mol%, and the total amount (K) is 3.8 to 10.0 mol%.

4. The butene polymer according to any one of claims 1 to 3, wherein the butene polymer further satisfies the following requirement (v):

   (v) a ratio of a weight average molecular weight to a number average molecular weight (Mw/Mn) is in the range of 1.5 to 20.0, as measured by gel permeation chromatography (GPC).

5. The butene polymer according to any one of claims 1 to 4, wherein the butene polymer further satisfies the following requirement (vi):

   (vi) a yield point stress (YS) is 16.0 MPa or more, as measured in a tensile test at a tension rate of 30 mm/min at a measurement temperature of 23°C in accordance with JIS K7113.

6. The butene polymer according to any one of claims 1 to 5, wherein the butene polymer further satisfies the following requirement (vii):

   (vii) a 95% crystal transformation completion time is 45 hours or less, as measured using a differential scanning calorimeter.

7. The butene polymer according to any one of claims 1 to 6, wherein the at least one olefin selected from ethylene and α-olefins having 3 to 20 carbon atoms other than 1-butene is propylene.

8. The butene polymer according to any one of claims 1 to 6, wherein the at least one olefin selected from ethylene and α-olefins having 3 to 20 carbon atoms other than 1-butene is ethylene.

9. The butene polymer according to claim 1, comprising a polymer in which the amount of the structural unit derived from 1-butene is 90.0 to 97.0 mol%, and the total amount (K) is 3.0 to 10.0 mol%, and which has an intrinsic viscosity [η] at 135°C in a decalin solvent in the range of 2.0 to 5.5 dl/g.

10. The butene polymer according to claim 9, further comprising a 1-butene homopolymer whose intrinsic viscosity [η] at 135°C in a decalin solvent is in the range of 0.5 to 1.5 dl/g.

11. A resin composition including the butene polymer according to any one of claims 1 to 10.

12. A molded article formed from the butene polymer according to any one of claims 1 to 10 or the resin composition according to claim 11.

**13.** The molded article according to claim 12, wherein the molded article is a pipe or a pipe joint.

[Fig. 1]

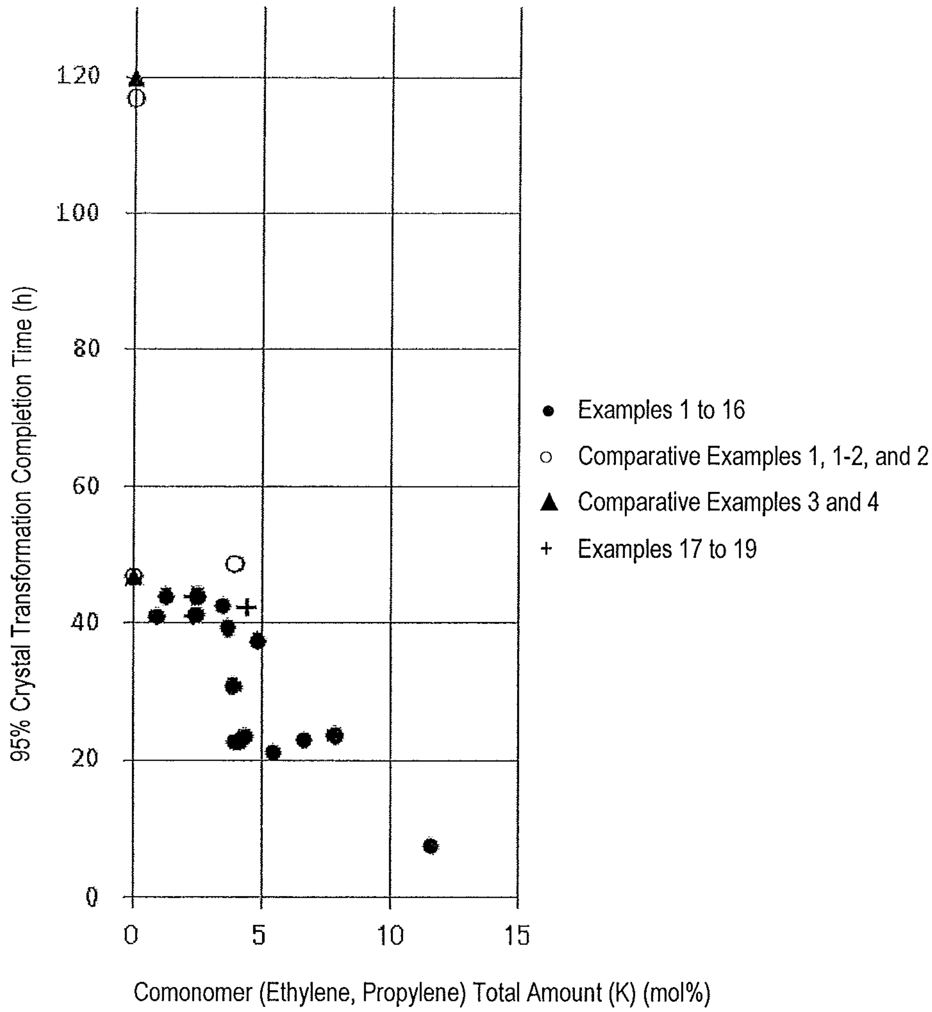
120
100
80
60
40
20
0
95% Crystal Transformation Completion Time (h)
0
5
10
15
Comonomer (Ethylene, Propylene) Total Amount (K) (mol%)
Examples 1 to 16
Comparative Examples 1, 1-2, and 2
Comparative Examples 3 and 4
Examples 17 to 19

[Fig. 2]

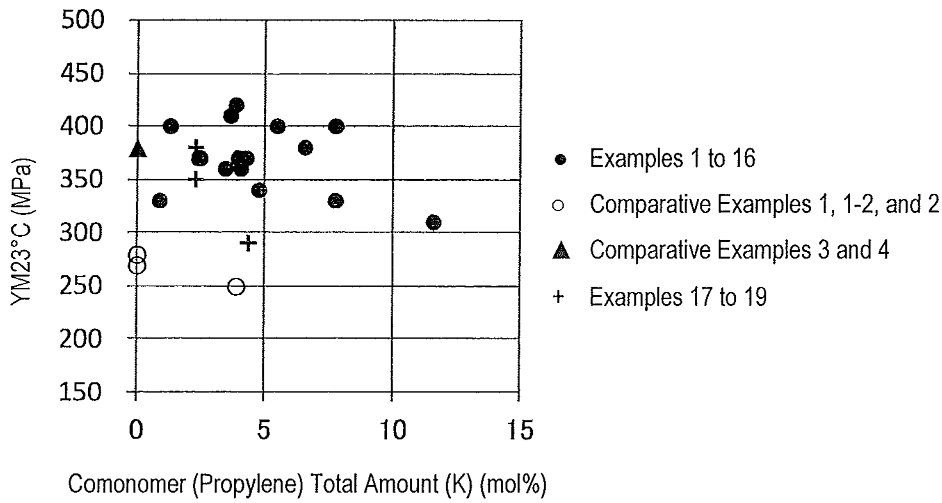
500
450
400
350
300
250
200
150
YM23°C (MPa)
0
5
10
15
Comonomer (Propylene) Total Amount (K) (mol%)
Examples 1 to 16
Comparative Examples 1, 1-2, and 2
Comparative Examples 3 and 4
Examples 17 to 19

[Fig. 3]

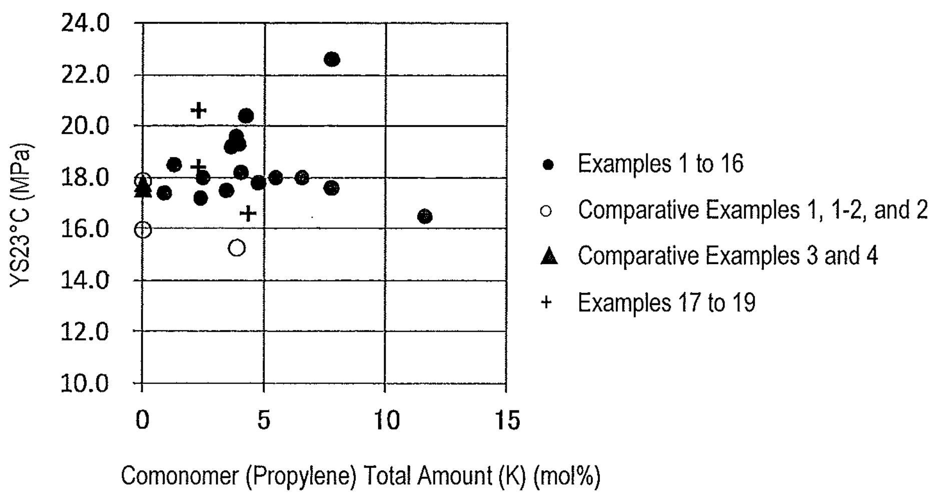
24.0
22.0
20.0
18.0
16.0
14.0
12.0
10.0
YS23°C (MPa)
0
5
10
15
Comonomer (Propylene) Total Amount (K) (mol%)
Examples 1 to 16
Comparative Examples 1, 1-2, and 2
Comparative Examples 3 and 4
Examples 17 to 19

## INTERNATIONAL SEARCH REPORT

International application No. PCT/JP2017/002105

A. CLASSIFICATION OF SUBJECT MATTER
*C08F210/08*(2006.01)i, *C08L23/20*(2006.01)i

According to International Patent Classification (IPC) or to both national classification and IPC

B. FIELDS SEARCHED

Minimum documentation searched (classification system followed by classification symbols)
C08F210/08, C08L23/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-509062 A (Basell Polyolefine GmbH), 07 April 2005 (07.04.2005), entire text & US 2004/0260040 A1 entire text & WO 2003/042258 A1 | 1-13 |
| A | JP 2010-501700 A (Basell Polyolefine GmbH), 21 January 2010 (21.01.2010), entire text & US 2010/0121011 A1 entire text & WO 2008/025710 A1 | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 March 2017 (13.03.17) | 21 March 2017 (21.03.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/002105

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-168784 A (Basell Polyolefine GmbH), 01 September 2011 (01.09.2011), entire text & JP 2006-526042 A & US 2006/0235173 A1 entire text & US 2008/0132659 A1 entire text & US 2008/0139761 A1 entire text & US 2008/0275254 A1 entire text & WO 2004/099269 A2 | 1-13 |
| A | WO 2003/070786 A1 (Idemitsu Petrochemical Co., Ltd.), 28 August 2003 (28.08.2003), entire text & US 2005/0245710 A1 entire text & EP 1477498 A1 | 1-13 |
| A | JP 2010-150433 A (Mitsui Chemicals, Inc.), 08 July 2010 (08.07.2010), entire text (Family: none) | 1-13 |
| A | WO 2014/050817 A1 (Mitsui Chemicals, Inc.), 03 April 2014 (03.04.2014), entire text & US 2015/0239996 A1 entire text & EP 2902419 A1 & CN 104662050 A & KR 10-2015-0053797 A | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61037833 A
- JP 57036140 A
- JP 57092038 A
- WO 2014050817 A
- US 4960878 A
- US 5041584 A
- JP H0278687 A
- JP H02167305 A
- JP H0224701 A
- JP H03103407 A
- JP H01501950 A
- JP H01502036 A
- JP H03179005 A
- JP H03179006 A
- JP H03207703 A
- JP H03207704 A
- JP 2004051676 A
- US 5321106 A
- EP 0320762 A
- JP 2002241553 A

### Non-patent literature cited in the description

- *Journal of Polymer Science,* 1963, vol. 1, 59-84
- *Journal of Organometallic Chem.,* 1985, vol. 288, 63-37